# EUROPEAN PATENT APPLICATION

(11) **EP 4 628 561 A1**
(43) Date of publication of application: **08.10.2025**
(21) Application number: 23897473.7
(22) Date of filing: 14.11.2023
(51) Int. Cl.: C09K 23/52, C08F 220/10, C08K 3/26, C08L 27/00, C08L 71/00

(54) **POLYMER DISPERSANT**

(30) Priority: 30.11.2022 JP 2022191214
(71) Applicant: Kao Corporation, Chuo-ku, Tokyo 103-8210 (JP)
(72) Inventor: TAKIGUCHI Osamu, Wakayama-shi, Wakayama 640-8580 (JP); WADA Satoshi, Wakayama-shi, Wakayama 640-8580 (JP); OSHIRO Kojun, Wakayama-shi, Wakayama 640-8580 (JP)
(74) Representative: Hoffmann Eitle
(86) International application number: PCT/JP2023/040878
(87) International publication number: WO 2024/116822

(57) **Abstract**

The present invention relates to a polymer dispersant for a non-aqueous solvent, containing a structural unit derived from a monomer represented by general formula (1) below and a structural unit derived from a monomer having a hydroxy group: In general formula (1), R¹, R², and R³ are each selected from a hydrogen element or a methyl group, X¹ represents an oxygen element, an ester group, an amide group, or -CH₂O-, Y¹ represents a repeating unit of an alkylene glycol having from 2 to 4 carbons, R⁴ represents a hydrogen element or an alkyl group having from 1 to 20 carbons, and n represents the number of repeating units of the alkylene glycol.

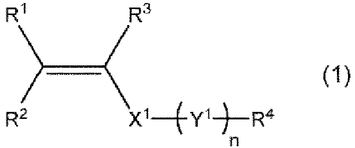

## Description

### Technical Field

The present invention relates to a polymer dispersant, an in-oil dispersion containing the polymer dispersant, and a halogen-based resin composition containing the polymer dispersant.

### Background Art

In order to prepare an in-oil dispersion containing a filler such as a metal oxide, an aromatic solvent has been typically used as a solvent. However, in view of an environmental impact, in recent years, a non-aromatic organic solvent having high polarity has come to be used, without blending an aromatic solvent.

Chlorine-containing resins such as a vinyl chloride resin (PVC) are important resins used in various fields as general-purpose polymers. For example, PVC is used in various applications such as house interior goods such as wallpaper; general-purpose goods such as toys; and automobile-related materials such as sealing materials.

When a chlorine-containing resin is used, for example, a plasticizer, a diluent, a viscosity reducing agent, a filler such as calcium carbonate, a pigment, a flame retardant, a foaming agent, a stabilizer, and the like are blended in a resin powder of the chlorine-containing resin to prepare a halogen-based resin composition. However, a halogen-based resin composition containing a filler often has a high viscosity and is often difficult or impossible to process. In addition, a processed product of the halogen-based resin composition containing a filler also has a problem in that breakage due to bending fatigue is likely to occur at low temperatures.

As a method for reducing the viscosity of an in-oil dispersion and a halogen-based resin composition, a hydrocarbon-based solvent such as mineral spirit, alkylbenzene or paraffin, an anionic surfactant, polyoxyethylene alkylphenol ether, polyethylene glycol, glycerin alkyl ester, or the like has been typically used as a diluent or a viscosity reducing agent. These diluents or viscosity reducing agents are added at the time of preparing the in-oil dispersion, or after production of the chlorine-containing resin or at the time of preparing the halogen-based resin composition, but the viscosity reducing effect cannot be said to be sufficient. In particular, when an inorganic filler is blended, viscosity reduction is insufficient. In addition, when an inorganic filler such as calcium carbonate is blended, the diluents or viscosity reducing agents cannot suppress the breakage of the processed product of the halogen-based resin composition due to bending fatigue.

JP 2009-138115 A (PTL 1) discloses an in-oil dispersant for electronic material composition containing: at least one dispersant selected from amidated products or esterified products of copolymers of an olefin and an unsaturated dibasic acid and having an amidation rate or esterification rate with respect to the unsaturated dibasic acid of from 10 to 60 mol%; and a non-aromatic organic solvent having a solubility parameter of from 8.5 to 22 (cal/cm³)^{1/2}.

JP 2001-335696 (PTL 2) discloses, as a method for reducing the viscosity of a halogen-based resin composition, a resin composition containing: a vinyl chloride-based resin; and one or more additives selected from the group consisting of esters of fatty acids and aliphatic alcohols and (poly)alkylene glycol mono- or di-alkyl ethers, one or more additives selected from the group consisting of polyoxyalkylene alkyl ethers and polyoxyalkylene alkyl ether carboxylates, a plasticizer, and a filler in specific amounts, respectively, with respect to the vinyl chloride-based resin.

### Summary of Invention

The present invention relates to a polymer dispersant containing a structural unit derived from a monomer having a specific structure and a structural unit derived from a monomer having a hydroxy group.

### Description of Embodiments

Although the viscosity of the in-oil dispersion described in PTL 1 has been reduced, there is still room for improvements in applicability and moldability of the in-oil dispersion.

In the resin composition described in PTL 2, the additive is adsorbed/desorbed on/from the filler, large amounts of the additives are required to reduce the viscosity of the resin composition, and there is a problem in that the additives bleed out from the molded resin product after molding. In addition, a processed product of a halogen-based resin composition using the resin composition described in PTL 2 has a problem in that breakage due to bending fatigue cannot be suppressed.

The present invention relates to a polymer dispersant capable of improving applicability and moldability by reducing a slurry viscosity of an in-oil dispersion, and capable of improving processability of a halogen-based resin composition and improving low-temperature bending resistance.

The present inventors have found that the above problems can be solved by a specific polymer dispersant, an in-oil dispersion containing the polymer dispersant, and a halogen-based resin composition containing a polymer dispersant and a halogen-based resin.

That is, the present invention relates to the following [1] to [18].
[1] A polymer dispersant containing a structural unit derived from a monomer represented by general formula (1) below and a structural unit derived from a monomer having a hydroxy group: 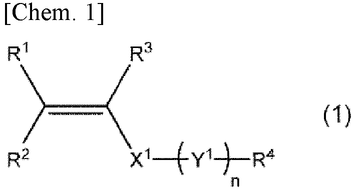 Where
   R¹, R², and R³ are each selected from a hydrogen element or a methyl group;
   X¹ represents an oxygen element, an ester group, an amide group, or -CH₂O-;
   Y¹ represents a repeating unit of an alkylene glycol having from 2 to 4 carbons;
   R⁴ represents a hydrogen element or an alkyl group having from 1 to 20 carbons; and n represents the number of repeating units of the alkylene glycol.
[2] The polymer dispersant according to [1], wherein the polymer dispersant is any one of polymer dispersants A to C below:
   the polymer dispersant A: a compound containing: 20 mass% or more and 65 mass% or less of a structural unit derived from a monomer (a) represented by general formula (1a) below, the monomer (a) having a molecular weight of 400 or more and 2,000 or less; 5 mass% or more and 50 mass% or less of a structural unit derived from a monomer (b) having a hydroxy group, the monomer (b) having a molecular weight of less than 400; and 30 mass% or more and 75 mass% or less of a structural unit derived from a monomer (c) having a hydrophobic group, the monomer (c) having a molecular weight of less than 400: 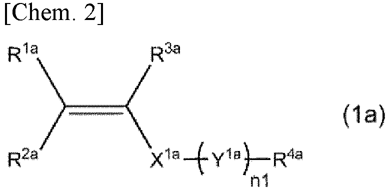
   where
   R^{1a}, R^{2a}, and R^{3a} are each selected from a hydrogen element or a methyl group;
   X^{1a} represents an oxygen element, an ester group, an amide group, or -CH₂O-;
   Y^{1a} represents a repeating unit of an alkylene glycol having from 2 to 4 carbons;
   R^{4a} represents a hydrogen element or an alkyl group having from 1 to 4 carbons; and n1 represents the number of repeating units of the alkylene glycol,
   the polymer dispersant B: a compound containing: 45 mass% or more and 95 mass% or less of a structural unit derived from a monomer (d) represented by general formula (1b) below, the monomer (d) having a molecular weight of 300 or more and 2,000 or less; 5 mass% or more and 40 mass% or less of a structural unit derived from the monomer (b) having a hydroxy group, the monomer (b) having a molecular weight of less than 400; and 0 mass% or more and 20 mass% or less of a structural unit derived from the monomer (c) having a hydrophobic group, the monomer (c) having a molecular weight of less than 400: 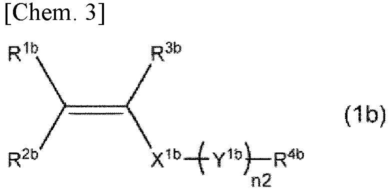
   where
   R^{1b}, R^{2b}, and R^{3b} are each selected from a hydrogen element or a methyl group;
   X^{1b} represents an oxygen element, an ester group, an amide group, or -CH₂O-;
   Y^{1b} represents a repeating unit of an alkylene glycol having from 2 to 4 carbons;
   R^{4b} represents a hydrocarbon group having from 6 to 18 carbons; and n2 represents the number of repeating units of the alkylene glycol, and
   the polymer dispersant C: a compound containing: 10 mass% or more and 40 mass% or less of a structural unit derived from the monomer (d) represented by the general formula (1b), the monomer (d) having a molecular weight of 300 or more and 2,000 or less; 5 mass% or more and 20 mass% or less of a structural unit derived from the monomer (b) having a hydroxy group, the monomer (b) having a molecular weight of less than 400; and 60 mass% or more and 80 mass% or less of a structural unit derived from a macromonomer composed of a structural unit derived from the monomer (c) having a hydrophobic group, the monomer (c) having a molecular weight of less than 400.
[3] The polymer dispersant according to [1] or [2], wherein the polymer dispersant has a weight average molecular weight of 5,000 or more and 120,000 or less.
[4] The polymer dispersant according to any one of [1] to [3], wherein the number n of repeating units of the alkylene glycol is 2 or more and 60 or less.
[5] An in-oil dispersion containing:
   the polymer dispersant described in any one of [1] to [4];
   an inorganic filler; and
   a compound having no group dissociating a hydrogen ion.
[6] The in-oil dispersion according to [5], wherein the compound having no group dissociating a hydrogen ion is selected from the group consisting of toluene, xylene, acetone, methyl ethyl ketone, cyclohexanone, ethyl acetate, butyl acetate, and propylene glycol methyl ether acetate.
[7] The in-oil dispersion according to [5] or [6], wherein a content of the inorganic filler is 10 mass% or more and 80 mass% or less.
[8] A halogen-based resin composition containing:
   the polymer dispersant described in any one of [1] to [4];
   an inorganic filler;
   a compound having no group dissociating a hydrogen ion; and
   a halogen-based resin.
[9] The halogen-based resin composition according to [8], wherein an SP value as determined by a Fedors method of the compound having no group dissociating a hydrogen ion is 7.5 (cal/cm³)^{1/2} or more and 11.5 (cal/cm³)^{1/2} or less.
[10] The halogen-based resin composition according to [8] or [9], wherein the compound having no group dissociating a hydrogen ion is selected from dialkyl phthalate or trialkyl trimellitate.
[11] The halogen-based resin composition according to any one of [8] to [10], wherein a content of the inorganic filler is 1 part by mass or more and 150 parts by mass or less per 100 parts by mass of the halogen-based resin.
[12] A method for producing an in-oil dispersion, the method including mixing the polymer dispersant described in any one of [1] to [4], an inorganic filler, and a compound having no group dissociating a hydrogen ion.
[13] A method for producing a halogen-based resin composition, the method including mixing the polymer dispersant described in any one of [1] to [4], an inorganic filler, a compound having no group dissociating a hydrogen ion, and a halogen-based resin.
[14] Use of a compound (I) as a dispersant, the compound (I) containing a structural unit derived from a monomer having a hydroxy group and a structural unit derived from a monomer represented by general formula (1) below: 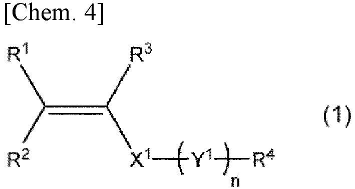 where
   R¹, R², and R³ are each selected from a hydrogen element or a methyl group;
   X¹ represents an oxygen element, an ester group, an amide group, or -CH₂O-;
   Y¹ represents a repeating unit of an alkylene glycol having from 2 to 4 carbons;
   R⁴ represents a hydrogen element or an alkyl group having from 1 to 20 carbons; and n represents the number of repeating units of the alkylene glycol.
[15] The use according to [14], wherein the compound (I) is any one of compounds A to C below:
   the compound A: a compound containing: 20 mass% or more and 65 mass% or less of a structural unit derived from a monomer (a) represented by general formula (1) below, the monomer (a) having a molecular weight of 400 or more and 2,000 or less; 5 mass% or more and 50 mass% or less of a structural unit derived from a monomer (b) having a hydroxy group, the monomer (b) having a molecular weight of less than 400; and 30 mass% or more and 75 mass% or less of a structural unit derived from a monomer (c) having a hydrophobic group, the monomer (c) having a molecular weight of less than 400: 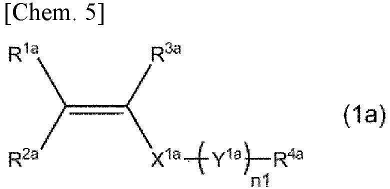
   where
   R^{1a}, R^{2a}, and R^{3a} are each selected from a hydrogen element or a methyl group;
   X^{1a} represents an oxygen element, an ester group, an amide group, or -CH₂O-;
   Y^{1a} represents a repeating unit of an alkylene glycol having from 2 to 4 carbons;
   R^{4a} represents a hydrogen element or an alkyl group having from 1 to 4 carbons; and n1 represents the number of repeating units of the alkylene glycol,
   the compound B: a compound containing: 45 mass% or more and 95 mass% or less of a structural unit derived from a monomer (d) represented by general formula (1b) below, the monomer (d) having a molecular weight of 300 or more and 2,000 or less; 5 mass% or more and 40 mass% or less of a structural unit derived from the monomer (b) having a hydroxy group, the monomer (b) having a molecular weight of less than 400; and 0 mass% or more and 20 mass% or less of a structural unit derived from the monomer (c) having a hydrophobic group, the monomer (c) having a molecular weight of less than 400: 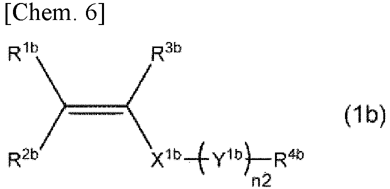
   where
   R^{1b}, R^{2b}, and R^{3b} are each selected from a hydrogen element or a methyl group;
   X^{1b} represents an oxygen element, an ester group, an amide group, or -CH₂O-;
   Y^{1b} represents a repeating unit of an alkylene glycol having from 2 to 4 carbons;
   R^{4b} represents a hydrocarbon group having from 6 to 18 carbons; and n2 represents the number of repeating units of the alkylene glycol, and
   the compound C: a compound containing: 10 mass% or more and 40 mass% or less of a structural unit derived from the monomer (d) represented by the general formula (1b), the monomer (d) having a molecular weight of 300 or more and 2,000 or less; 5 mass% or more and 20 mass% or less of a structural unit derived from the monomer (b) having a hydroxy group, the monomer (b) having a molecular weight of less than 400; and 60 mass% or more and 80 mass% or less of a structural unit derived from a macromonomer composed of a structural unit derived from the monomer (c) having a hydrophobic group, the monomer (c) having a molecular weight of less than 400.
[16] The use according to [15] for dispersing an inorganic filler in a compound having no group dissociating a hydrogen ion.
[17] Use of the polymer dispersant described in any one of [1] to [4] for production of an in-oil dispersion.
[18] Use of the polymer dispersant described in any one of [1] to [4] for production of a halogen-based resin composition.

According to the present invention, it is possible to provide a polymer dispersant which is used in an in-oil dispersion to reduce slurry viscosity, thereby making it possible to improve applicability and moldability, and an in-oil dispersion having a reduced slurry viscosity, and thus having improved applicability and moldability.

Furthermore, it is possible to provide a polymer dispersant which is used in a halogen-based resin composition to reduce a slurry viscosity of the halogen-based resin composition, thereby making it possible to improve processability and to improve low-temperature bending resistance, and a halogen-based resin composition having a reduced slurry viscosity, and thus having an improved processability and an improved low-temperature bending resistance.

### Polymer Dispersant

The polymer dispersant of the present invention is a compound (I) composed of a copolymer containing a structural unit derived from a monomer represented by general formula (1) below and a structural unit derived from a monomer having a hydroxy group.

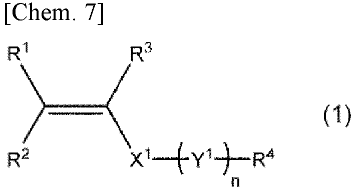

In general formula (1), R¹, R², and R³ are each selected from a hydrogen element and a methyl group; X¹ represents an oxygen element, an ester group, an amide group, or -CH₂O-; Y¹ represents a repeating unit of an alkylene glycol having from 2 to 4 carbons; R⁴ represents a hydrogen element or an alkyl group having from 1 to 20 carbons; and n represents the number of repeating units of the alkylene glycol.

### Monomer Represented by General Formula (1)

A structural unit derived from the monomer represented by general formula (1) in the polymer dispersant plays a role of adjusting the hydrophilicity-hydrophobicity balance of the polymer dispersant and improving dispersibility by steric repulsion.

For R¹, R², and R³, from the viewpoint of easy availability and easy production of the polymer dispersant, it is preferable that R¹ and R² be hydrogen elements and that R³ be a hydrogen element or a methyl group.

When X¹ is an oxygen element, the monomer represented by general formula (1) is a substituted or unsubstituted vinyl ether; when X¹ is an ester group or an amide group, the monomer represented by general formula (1) is an ester or amide derived from (meth)acrylic acid; and when X¹ is -CH₂O-, the monomer represented by general formula (1) is a substituted or unsubstituted allyl ether. Among them, X¹ is preferably an ester group from the viewpoint of easy availability and easy production of the polymer dispersant.

In the present specification, the "(meth)acrylic acid" means at least one selected from acrylic acid or methacrylic acid, and the "(meth)acrylate" means at least one selected from acrylate or methacrylate.

Y¹ represents a repeating unit of an alkylene glycol having from 2 to 4 carbons, and (Y¹)ₙ represents a polyalkylene glycol composed of a repeating unit of an alkylene glycol having from 2 to 4 carbons. The alkylene glycol may be a linear alkylene glycol such as ethylene glycol, trimethylene glycol, or tetramethylene glycol, or may be a branched alkylene glycol such as propylene glycol or butylene glycol. Y¹ may be a repeating unit derived from a single type of alkylene glycol or may be a combination of repeating units derived from two or more kinds of alkylene glycols.

n represents the number of repeating units of the alkylene glycol, and is preferably 1 or more and is preferably 100 or less, from the viewpoints of improvements in applicability and moldability of the in-oil dispersion and from the viewpoints of improvement in processability and improvement in low-temperature bending resistance of the halogen-based resin composition.

Examples of a hydrocarbon group having from 1 to 20 carbons represented by R⁴ include a linear or branched alkyl group having from 1 to 20 carbons, a linear or branched alkenyl group having from 1 to 20 carbons, and an aromatic group having from 6 to 18 carbons.

Examples of the linear or branched alkyl group having from 1 to 20 carbons include a methyl group, an ethyl group, an n-propyl group, an isopropyl group, an n-butyl group, a sec-butyl group, a tert-butyl group, an isobutyl group, a pentyl group, a hexyl group, a heptyl group, an octyl group, a 2-ethylhexyl group, a nonyl group, a decyl group, a lauryl group, a stearyl group, and an icosyl group.

Examples of the linear or branched alkenyl group having from 1 to 20 carbons include an alkenyl group having a carbon-carbon double bond in the linear chain. The alkenyl group may have a plurality of carbon-carbon double bonds. The geometric isomerism of the carbon-carbon double bond may be cis or trans.

Examples of the aromatic group having from 1 to 20 carbons include a phenyl group and a naphthyl group.

### Monomer Having Hydroxy Group

The monomer having a hydroxy group is a monomer that imparts hydrophilicity to the polymer dispersant, and examples thereof include esters of α,β-unsaturated carboxylic acids such as (meth)acrylic acid, fumaric acid, maleic acid, crotonic acid, and itaconic acid with polyhydric alcohols having two or more hydroxy groups, amides of α,β-unsaturated carboxylic acids with amino alcohols having one or more hydroxy groups, hydroxy group-substituted styrene-based compounds, and hydroxy group-substituted linear or branched alkenes, from the viewpoints of improvements in applicability and moldability of the in-oil dispersion and from the viewpoints of improvement in processability and improvement in low-temperature bending resistance of the halogen-based resin composition.

When the α,β-unsaturated carboxylic acid is a polyvalent carboxylic acid, the monomer having a hydroxy group may have a structure in which one or more carboxy groups are esters with a polyhydric alcohol and the other carboxy groups are unsubstituted alkyl esters and/or unsubstituted alkylamides, a structure in which one or more carboxy groups are amides with an aminoalcohol and the other carboxy groups are unsubstituted alkyl esters and/or unsubstituted alkylamides, or a structure in which one or more carboxy groups are esters with a polyhydric alcohol, one or more carboxy groups are amides with an amino alcohol, and the other carboxy groups are unsubstituted alkyl esters and/or unsubstituted alkyl amides, and a structure in which all carboxy groups are esters with a polyhydric alcohol and/or amides with an aminoalcohol.

Examples of the ester of an α,β-unsaturated carboxylic acid with a polyhydric alcohol include the ester of an α,β-unsaturated carboxylic acid and a polyhydric alcohol having from 2 to 6 carbons and a polyalkylene glycol, from the viewpoint of easy introduction into a molecule. Examples of the polyhydric alcohol having from 2 to 6 carbons include linear diols such as 1,2-ethanediol (ethylene glycol), 1,3-propanediol (trimethylene glycol), 1,4-butanediol (tetramethylene glycol), 1,5-pentanediol, and 1,6-hexanediol; branched diols such as 1,2-propanediol (propylene glycol), 1,2-butanediol (butylene glycol), 1,3-butanediol, 2,3-butanediol, 1,2-pentanediol, 1,3-pentanediol, 1,2-hexanediol, and 1,3-hexanediol; trimethylolethane, trimethylolpropane, and sugar alcohols such as glycerin, erythritol, xylitol, and sorbitol. Examples of the polyalkylene glycol include a polyalkylene glycol represented as (Y¹)ₙ in general formula (1).

Examples of the hydroxy group-substituted styrene-based compound include vinylphenol and isopropenylphenol.

Examples of the hydroxy group-substituted linear or branched alkene include a hydroxy group-substituted alkene having 6 or more and 20 or less carbons, from the viewpoint of easy production of the polymer dispersant. Among them, a linear alkene having a double bond at one end and a hydroxy group at the other end is preferable, from the viewpoint of easy introduction into a molecule.

### Monomer Having Hydrophobic Group

The polymer dispersant may contain a structural unit derived from a monomer having a hydrophobic group that imparts hydrophobicity to the polymer dispersant. Examples of the monomer having a hydrophobic group include esters and amides of α,β-unsaturated carboxylic acids such as (meth)acrylic acid, fumaric acid, maleic acid, crotonic acid, and itaconic acid, styrene-based compounds, and linear or branched alkenes, from the viewpoints of improvements in applicability and moldability of the in-oil dispersion, and from the viewpoints of improvement in processability and improvement in low-temperature bending resistance of the halogen-based resin composition.

When the α,β-unsaturated carboxylic acid is a polyvalent carboxylic acid, the monomer having a hydrophobic group may have a structure in which all the carboxy groups are esters, a structure in which all the carboxy groups are amides, or a structure containing an ester and an amide.

Examples of the ester of an α,β-unsaturated carboxylic acid include an ester of an α,β-unsaturated carboxylic acid with a linear or branched alkyl alcohol from the viewpoint of easy availability. The number of carbons of the linear or branched alkyl alcohol is preferably 1 or more, more preferably 2 or more, and even more preferably 3 or more, and is preferably 30 or less, more preferably 25 or less, and even more preferably 20 or less, from the viewpoint of improving compatibility with the halogen-based resin and/or the compound having no group dissociating a hydrogen ion. From the same viewpoint, the number of carbons of the linear or branched alkyl alcohol is preferably 1 or more and 30 or less, more preferably 2 or more and 25 or less, and even more preferably 3 or more and 20 or less.

Examples of the amide of an α,β-unsaturated carboxylic acid include amides of an α,β-unsaturated carboxylic acid with a linear or branched primary alkylamine, from the viewpoint of easy introduction into a molecule. The number of carbons of the linear or branched primary alkylamine is preferably 4 or more, more preferably 6 or more, and even more preferably 8 or more, and is preferably 22 or less, more preferably 20 or less, and even more preferably 18 or less, from the viewpoint of improving compatibility with the halogen-based resin and/or the compound having no group dissociating a hydrogen ion. From the same viewpoint, the number of carbons of the linear or branched primary alkylamine is preferably 4 or more and 22 or less, more preferably 6 or more and 20 or less, and even more preferably 8 or more and 18 or less.

Examples of the styrene-based compounds include styrene and α-methylstyrene from the viewpoint of easy availability.

Examples of the linear or branched alkenes include alkenes having 6 or more and 25 or less carbons, from the viewpoint of easy production of the polymer dispersant. Among them, a linear alkene having a double bond at one terminal is preferable, from the viewpoint of easy introduction into a molecule.

The polymer dispersant of the present invention exhibits, when the polymer dispersant is used in an in-oil dispersion, an effect of reducing the slurry viscosity of the in-oil dispersion, thereby improving the applicability and moldability, and exhibits, when the polymer dispersant is used in a halogen-based resin composition, an effect of reducing the slurry viscosity of the halogen-based resin composition, thereby improving the processability and improving the low-temperature bending resistance. The reason why such an effect is exhibited is not clear, but is considered as follows.

It is considered that, since the in-oil dispersion of the present invention contains the polymer dispersant of the present invention, an inorganic filler, and a compound having no group dissociating a hydrogen ion, the polymer dispersant is uniformly adsorbed on the surface of the inorganic filler in the compound having no group dissociating a hydrogen ion to make the surface of the inorganic filler uniformly hydrophobic, thereby more strongly suppressing aggregation and network formation of the inorganic filler. Therefore, it is considered that the viscosity of the in-oil dispersion containing the polymer dispersant, an inorganic filler, and a compound having no group dissociating a hydrogen ion is low, and that the in-oil dispersion has excellent applicability and moldability.

Furthermore, the inorganic filler is hydrophilic in the halogen-based resin composition, and thus aggregates and forms a network in the halogen-based resin composition for stabilization. However, the inorganic filler having aggregated and formed a network increases the viscosity of the halogen-based resin composition.

Here, it is considered that the polymer dispersant of the present invention is adsorbed on the surface of the inorganic filler to make the surface hydrophobic, thereby suppressing the aggregation and network formation of the inorganic filler in the halogen-based resin composition and reducing the slurry viscosity of the halogen-based resin composition, and thus that the halogen-based resin composition has excellent processability.

The present inventors have also found that the breakage of the halogen-based resin composition occurs from the surface of the inorganic filler. As described above, it is considered that the excellent halogen-based resin composition of the present invention has excellent low-temperature bending resistance because the polymer dispersant of the present invention is adsorbed on the surface of the inorganic filler to make the surface hydrophobic, thereby suppressing the breakage of the halogen-based resin composition occurring from the surface of the inorganic filler.

Since the polymer dispersant of the present invention has an excellent balance between hydrophilicity and hydrophobicity, the polymer dispersant exhibits excellent dispersibility when used in a compound having no group dissociating a hydrogen ion, which will be described later.

The polymer dispersant of the present invention is preferably any one of a polymer dispersant A, a polymer dispersant B, and a polymer dispersant C, from the viewpoints of improvements in applicability and moldability of the in-oil dispersion and from the viewpoints of improvement in processability and improvement in low-temperature bending resistance of the halogen-based resin composition.

### Polymer Dispersant A

The polymer dispersant A is a compound (A) composed of a copolymer in which, in the polymer dispersant, the structural unit derived from the monomer represented by general formula (1) is a structural unit derived from a monomer (a) represented by general formula (1a) below, the monomer (a) having a molecular weight of 400 or more and 2,000 or less; the structural unit derived from the monomer having a hydroxy group is a structural unit derived from a monomer (b) having a hydroxy group, the monomer (b) having a molecular weight of less than 400; and further a structural unit derived from a monomer (c) having a hydrophobic group, the monomer (c) having a molecular weight of less than 400, is contained as the structural unit derived from the monomer having a hydrophobic group.

### Monomer (a)

The monomer (a) is a monomer represented by general formula (1a) below and having a molecular weight of 400 or more and 2,000 or less, and adjusts the hydrophilicity-hydrophobicity balance of the polymer dispersant A.

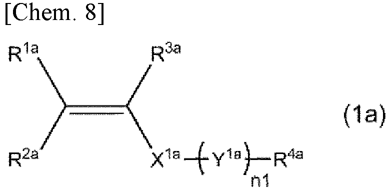

In general formula (1a), R^{1a}, R^{2a}, R^{3a}, and X^{1a} are the same as R¹, R², R³, and X¹ in general formula (1), and preferred ranges thereof are also the same.

In general formula (1a), Y^{1a} represents a repeating unit of an alkylene glycol having from 2 to 4 carbons, and (Y^{1a})ₙ₁ represents a polyalkylene glycol composed of a repeating unit of an alkylene glycol having from 2 to 4 carbons. Examples of the alkylene glycol include the same alkylene glycols as those for Y in general formula (1). Among them, Y^{1a} is preferably ethylene glycol.

In general formula (1a), n1 represents the number of repeating units of the alkylene glycol represented by Y^{1a}, and is preferably 2 or more, more preferably 5 or more, even more preferably 10 or more, and still more preferably 15 or more, and is preferably 40 or less, more preferably 35 or less, and even more preferably 30 or less, from the viewpoints of improvements in applicability and moldability of the in-oil dispersion and from the viewpoints of improvement in processability and improvement in low-temperature bending resistance of the halogen-based resin composition. From the same viewpoint, n1 is preferably 2 or more and 40 or less, more preferably 5 or more and 35 or less, even more preferably 10 or more and 30 or less, and still more preferably 15 or more and 30 or less.

In general formula (1a), R^{4a} represents an alkyl group having from 1 to 4 carbons, such as a methyl group, an ethyl group, an n-propyl group, an isopropyl group, an n-butyl group, a sec-butyl group, a tert-butyl group, or an isobutyl group, and a methyl group is preferable.

As the structural unit derived from the monomer (a) contained in the polymer dispersant A, a structural unit derived from methoxypolyethylene glycol (meth)acrylate is preferable from the viewpoints of improvements in applicability and moldability of the in-oil dispersion and from the viewpoints of improvement in processability and improvement in low-temperature bending resistance of the halogen-based resin composition.

In the polymer dispersant A, a content of the structural unit derived from the monomer (a) is 20 mass% or more, preferably 25 mass% or more, more preferably 30 mass% or more, even more preferably 35 mass% or more, and still more preferably 37 mass% or more, and is 65 mass% or less, preferably 55 mass% or less, and even more preferably 45 mass% or less. In the polymer dispersant A, the content of the structural unit derived from the monomer (a) is 20 mass% or more and 65 mass% or less, preferably 25 mass% or more and 65 mass% or less, more preferably 30 mass% or more and 55 mass% or less, even more preferably 35 mass% or more and 45 mass% or less, and still more preferably 37 mass% or more and 45 mass% or less.

### Monomer (b)

The monomer (b) is a monomer having a hydroxy group and a molecular weight of less than 400, and imparts hydrophilicity to the polymer dispersant A. The monomer (b) is, for example, the monomer having a hydroxy group exemplified for the polymer dispersant, the monomer having a molecular weight of less than 400.

When the monomer (b) is an ester of an α,β-unsaturated carboxylic acid with a polyhydric alcohol. When the polyhydric alcohol is a polyalkylene glycol, the number of repeating units of the alkylene glycol in the polyalkylene glycol is preferably 2 or more and 8 or less, and more preferably 4 or more and 6 or less. Among them, polyhydric alcohols having hydroxy groups at both terminals are preferable, and 1,2-ethanediol, glycerin, and polypropylene glycol are more preferable, from the viewpoints of improvements in applicability and moldability of the in-oil dispersion and from the viewpoints of improvement in processability and improvement in low-temperature bending resistance of the halogen-based resin composition.

The structural unit derived from the monomer (b) contained in the polymer dispersant A is preferably a structural unit derived from 1,2-hydroxyethyl mono(meth)acrylate, a structural unit derived from glycerin mono(meth)acrylate, or a structural unit derived from polypropylene glycol mono(meth)acrylate, and more preferably a structural unit derived from glycerin mono(meth)acrylate, from the viewpoints of improvements in applicability and moldability of the in-oil dispersion and from the viewpoints of improvement in processability and improvement in low-temperature bending resistance of the halogen-based resin composition.

In the polymer dispersant A, a content of the structural unit derived from the monomer (b) is 5 mass% or more, preferably 10 mass% or more, and more preferably 13 mass% or more, and is 50 mass% or less, preferably 40 mass% or less, more preferably 30 mass% or less, and even more preferably 20 mass% or less. In the polymer dispersant A, the content of the structural unit derived from the monomer (b) is 5 mass% or more and 50 mass% or less, preferably 10 mass% or more and 40 mass% or less, more preferably 10 mass% or more and 30 mass% or less, and even more preferably 13 mass% or more and 20 mass% or less.

### Monomer (c)

The monomer (c) is a monomer having a hydrophobic group and a molecular weight of less than 400, and imparts hydrophobicity to the polymer dispersant A. The monomer (c) is, for example, the monomer having a hydrophobic group exemplified for the polymer dispersant, the monomer having a molecular weight of less than 400.

As the structural unit derived from the monomer (c) contained in the polymer dispersant A, a structural unit derived from stearyl (meth)acrylate is preferable from the viewpoints of improvements in applicability and moldability of the in-oil dispersion and from the viewpoints of improvement in processability and improvement in low-temperature bending resistance of the halogen-based resin composition.

In the polymer dispersant A, a content of the structural unit derived from the monomer (c) is 30 mass% or more, preferably 35 mass% or more, and more preferably 38 mass% or more, and is 75 mass% or less, preferably 65 mass% or less, more preferably 55 mass% or less, and even more preferably 50 mass% or less. In the polymer dispersant A, the content of the structural unit derived from the monomer (C) is 30 mass% or more and 75 mass% or less, preferably 35 mass% or more and 65 mass% or less, more preferably 35 mass% or more and 55 mass% or less, and even more preferably 38 mass% or more and 50 mass% or less.

A weight average molecular weight of the polymer dispersant A is preferably 5,000 or more, more preferably 10,000 or more, even more preferably 15,000 or more, and still more preferably 20,000 or more from the viewpoint of suppressing desorption from the inorganic filler, and is preferably 120,000 or less, more preferably 100,000 or less, even more preferably 50,000 or less, and still more preferably 30,000 or less from the viewpoint of efficiently adsorbing on the inorganic filler. From the same viewpoint, the weight average molecular weight of the polymer dispersant A is preferably 5,000 or more and 120,000 or less, more preferably 10,000 or more and 100,000 or less, even more preferably 15,000 or more and 50,000 or less, and still more preferably 20,000 or more and 30,000 or less.

The weight average molecular weight is measured by the method shown in Examples.

### Polymer Dispersant B

The polymer dispersant B is a compound (B) composed of a copolymer in which, in the polymer dispersant, the structural unit derived from the monomer represented by general formula (1) is a structural unit derived from a monomer (d) represented by general formula (1b) below, the monomer (b) having a molecular weight of 300 or more and 2,000 or less, and the structural unit derived from the monomer having a hydroxy group is a structural unit derived from a monomer (b) having a hydroxy group, the monomer (b) having a molecular weight of less than 400. The compound (B) which is the polymer dispersant B may contain the structural unit derived from the monomer (c) having a hydrophobic group and having a molecular weight of less than 400.

### Monomer (d)

The monomer (d) is a monomer represented by general formula (1b) below and having a molecular weight of 300 or more and 2,000 or less, and adjusts the hydrophilicity-hydrophobicity balance of the polymer dispersant B.

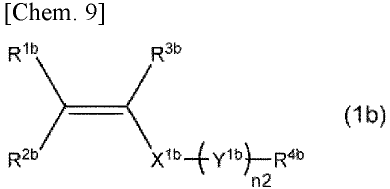

In general formula (1b), R^{1b}, R^{2b}, R^{3b}, and X^{1b} are the same as R¹, R², R³, and X¹ in general formula (1), and preferred ranges thereof are also the same.

In general formula (1b), Y^{1b} represents a repeating unit of an alkylene glycol having from 2 to 4 carbons, and (Y^{1b})ₙ₂ represents a polyalkylene glycol composed of a repeating unit of an alkylene glycol having from 2 to 4 carbons. Examples of the alkylene glycol include the same alkylene glycols as those for Y in general formula (1). Among them, Y^{1b} is more preferably polyethylene glycol, polypropylene glycol, or a combination thereof.

In general formula (1b), n2 represents the number of repeating units of the alkylene glycol represented by Y^{1b}, and is preferably 2 or more, more preferably 3 or more, and even more preferably 4 or more, and is preferably 50 or less, more preferably 40 or less, and even more preferably 35 or less, from the viewpoints of improvements in applicability and moldability of the in-oil dispersion and from the viewpoints of improvement in processability and improvement in low-temperature bending resistance of the halogen-based resin composition. From the same viewpoint, n2 is preferably 2 or more and 50 or less, more preferably 3 or more and 40 or less, and even more preferably 4 or more and 35 or less.

In general formula (1b), R^{4b} is a hydrocarbon group having from 6 to 18 carbons, and examples thereof include linear or branched alkyl groups having from 6 to 18 carbons, linear or branched alkenyl groups having from 6 to 18 carbons, and aromatic groups having from 6 to 18 carbons. Among them, a linear or branched alkyl group having from 6 to 18 carbons and a linear or branched alkenyl group having from 6 to 18 carbons are preferable, and a linear or branched alkyl group having from 6 to 18 carbons is more preferable.

Examples of the linear or branched alkyl group having from 6 to 18 carbons include a hexyl group, a heptyl group, an octyl group, a 2-ethylhexyl group, a nonyl group, a decyl group, a lauryl group, and a stearyl group.

Examples of the linear or branched alkenyl group having from 6 to 18 carbons include an alkenyl group having a carbon-carbon double bond in the linear chain. The alkenyl group may have a plurality of carbon-carbon double bonds. The geometric isomerism of the carbon-carbon double bond may be cis or trans.

Examples of the aromatic group having from 6 to 18 carbons include a phenyl group and a naphthyl group.

The structural unit derived from the monomer (d) contained in the polymer dispersant B is preferably a structural unit derived from lauroxypolyethylene glycol (meth)acrylate, a structural unit derived from 2-ethylhexyloxypolypropylene glycol polyethylene glycol (meth)acrylate, a structural unit derived from 2-ethylhexyloxypolyethylene glycol (meth)acrylate, or a structural unit derived from stearoxypolyethylene glycol (meth)acrylate, from the viewpoints of improvements in applicability and moldability of the in-oil dispersion and from the viewpoints of improvement in processability and improvement in low-temperature bending resistance of the halogen-based resin composition.

When the polymer dispersant B does not contain the structural unit derived from the monomer (c), a content of the structural unit derived from the monomer (d) is 60 mass% or more, preferably 70 mass% or more, and more preferably 80 mass% or more, and is 95 mass% or less, preferably 93 mass% or less, and more preferably 90 mass% or less. When the polymer dispersant B does not contain the structural unit derived from the monomer (c), the content of the structural unit derived from the monomer (d) is 60 mass% or more and 95 mass% or less, preferably 70 mass% or more and 93 mass% or less, and more preferably 80 mass% or more and 90 mass% or less.

When the polymer dispersant B contains the structural unit derived from the monomer (c), the content of the structural unit derived from the monomer (d) is 45 mass% or more, preferably 50 mass% or more, more preferably 55 mass% or more, even more preferably 60 mass% or more, still more preferably 70 mass% or more, even still more preferably 75 mass% or more, and even still more preferably 80 mass% or more, and is less than 95 mass%, preferably 90 mass% or less, and more preferably 88 mass% or less. When the polymer dispersant B contains the structural unit derived from the monomer (c), the content of the structural unit derived from the monomer (d) is 45 mass% or more and less than 95 mass%, preferably 50 mass% or more and 90 mass% or less, more preferably 55 mass% or more and 90 mass% or less, even more preferably 60 mass% or more and 90 mass% or less, still more preferably 70 mass% or more and 88 mass% or less, even still more preferably 75 mass% or more and 88 mass% or less, and even still more preferably 80 mass% or more and 88 mass% or less.

### Monomer (b)

The monomer (b) is a monomer having a hydroxy group and a molecular weight of less than 400, and imparts hydrophilicity to the polymer dispersant B. Examples of the monomer (b) include the same as those exemplified for the polymer dispersant A.

The monomer (b) is preferably a structural unit derived from 2-hydroxyethyl (meth)acrylate, a structural unit derived from glycerin mono(meth)acrylate, or a structural unit derived from polypropylene glycol mono(meth)acrylate, from the viewpoints of improvements in applicability and moldability of the in-oil dispersion and from the viewpoints of improvement in processability and improvement in low-temperature bending resistance of the halogen-based resin composition.

When the polymer dispersant B does not contain the structural unit derived from the monomer (c), the content of the structural unit derived from the monomer (b) is 5 mass% or more, preferably 10 mass% or more, and is 40 mass% or less, preferably 35 mass% or less, more preferably 30 mass% or less, and even more preferably 25 mass% or less. When the polymer dispersant B does not contain the structural unit derived from the monomer (c), the content of the structural unit derived from the monomer (b) is 5 mass% or more and 40 mass% or less, preferably 5 mass% or more and 35 mass% or less, more preferably 10 mass% or more and 30 mass% or less, and even more preferably 10 mass% or more and 25 mass% or less.

When the polymer dispersant B contains the structural unit derived from the monomer (c), the content of the structural unit derived from the monomer (b) is 5 mass% or more, preferably 7 mass% or more, and more preferably 8 mass% or more, and is 40 mass% or less, preferably 35 mass% or less, more preferably 30 mass% or less, even more preferably 20 mass% or less, still more preferably 15 mass% or less, and even still more preferably 12 mass% or less. When the polymer dispersant B contains the structural unit derived from the monomer (c), the content of the structural unit derived from the monomer (b) is 5 mass% or more and 40 mass% or less, preferably 5 mass% or more and 35 mass% or less, more preferably 7 mass% or more and 30 mass% or less, even more preferably 7 mass% or more and 20 mass% or less, still more preferably 8 mass% or more and 15 mass% or less, and even still more preferably 8 mass% or more and 12 mass% or less.

### Monomer (c)

The monomer (c) is a monomer having a hydrophobic group and a molecular weight of less than 400, and imparts hydrophobicity to the polymer dispersant B as needed. Examples of the monomer (c) include the same as those exemplified for the polymer dispersant A.

As the structural unit derived from the monomer (c) contained in the polymer dispersant B, a structural unit derived from 2-ethylhexyl (meth)acrylate is preferable from the viewpoints of improvements in applicability and moldability of the in-oil dispersion and from the viewpoints of improvement in processability and improvement in low-temperature bending resistance of the halogen-based resin composition.

The polymer dispersant B may not contain the structural unit derived from the monomer (c) (content is 0 mass%). When the polymer dispersant B contains the structural unit derived from the monomer (c), the content of the structural unit derived from the monomer (c) is more than 0 mass%, preferably 2 mass% or more, and more preferably 4 mass% or more, and is 20 mass% or less, preferably 15 mass% or less, more preferably 10 mass% or less, and still more preferably 8 mass% or less. When the polymer dispersant B contains the structural unit derived from the monomer (c), the content of the structural unit derived from the monomer (c) is more than 0 mass% and 20 mass% or less, preferably 2 mass% or more and 15 mass% or less, more preferably 2 mass% or more and 10 mass% or less, and even more preferably 4 mass% or more and 8 mass% or less.

A weight average molecular weight of the polymer dispersant B is preferably 5,000 or more, more preferably 8,000 or more, even more preferably 10,000 or more, still more preferably 12,000 or more, and even still more preferably 14,000 or more from the viewpoint of suppressing desorption from the inorganic filler, and is preferably 120,000 or less, more preferably 115,000 or less, even more preferably 110,000 or less, still more preferably 100,000 or less, even still more preferably 90,000 or less, even still more preferably 80,000 or less, even still more preferably 70,000 or less, even still more preferably 60,000 or less, even still more preferably 50,000 or less, even still more preferably 40,000 or less, even still more preferably 30,000 or less, even still more preferably 20,000 or less, and even still more preferably 17,000 or less from the viewpoint of efficiently adsorbing on the inorganic filler. From the same viewpoint, the weight average molecular weight of the polymer dispersant B is preferably 5,000 or more and 120,000 or less, more preferably 5,000 or more and 115,000 or less, even more preferably 8,000 or more and 110,000 or less, still even more preferably 8,000 or more and 100,000 or less, still even more preferably 8,000 or more and 90,000 or less, still even more preferably 10,000 or more and 80,000 or less, still even more preferably 10,000 or more and 70,000 or less, still even more preferably 10,000 or more and 60,000 or less, still even more preferably 12,000 or more and 50,000 or less, still even more preferably 12,000 or more and 40,000 or less, still even more preferably 12,000 or more and 30,000 or less, still even more preferably 14,000 or more and 20,000 or less, and still even more preferably 14,000 or more and 17,000 or less.

The weight average molecular weight is measured by the method shown in Examples.

### Polymer Dispersant C

The polymer dispersant C is a compound (C) composed of a copolymer in which, in the polymer dispersant, the structural unit derived from the monomer represented by general formula (1) is a structural unit derived from a monomer (d) represented by general formula (1b), the monomer (a) having a molecular weight of 300 or more and 2,000 or less; the structural unit derived from the monomer having a hydroxy group is a structural unit derived from a monomer (b) having a hydroxy group, the monomer (b) having a molecular weight of less than 400; and further a structural unit derived from a monomer (c) having a hydrophobic group, the monomer (c) having a molecular weight of less than 400, is contained as the structural unit derived from the monomer having a hydrophobic group.

### Monomer (d)

The monomer (d) is a monomer represented by general formula (1b) below and having a molecular weight of 300 or more and 2,000 or less, and adjusts the hydrophilicity-hydrophobicity balance of the polymer dispersant C. Examples of the monomer (d) include the same as those exemplified for the polymer dispersant B.

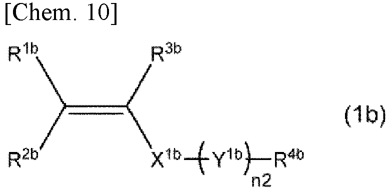

As the structural unit derived from the monomer (d) contained in the polymer dispersant C, a structural unit derived from 2-ethylhexyloxypolyethylene glycol (meth)acrylate is preferable from the viewpoints of improvements in applicability and moldability of the in-oil dispersion and from the viewpoints of improvement in processability and improvement in low-temperature bending resistance of the halogen-based resin composition.

In the polymer dispersant C, the content of the structural unit derived from the monomer (d) is 10 mass% or more, preferably 12 mass% or more, more preferably 15 mass% or more, and even more preferably 20 mass% or more, and is less than 40 mass%, preferably 35 mass% or less, and more preferably 30 mass% or less. In the polymer dispersant C, the content of the structural unit derived from the monomer (d) is 10 mass% or more and less than 40 mass%, preferably 12 mass% or more and 35 mass% or less, more preferably 15 mass% or more, and even more preferably 20 mass% or more and 30 mass% or less.

### Monomer (b)

The monomer (b) is a monomer (b) having a hydroxy group and a molecular weight of less than 400, and imparts hydrophilicity to the polymer dispersant C. Examples of the monomer (b) include the same as those exemplified for the polymer dispersant A.

The monomer (b) is preferably a structural unit derived from 2-hydroxyethyl (meth)acrylate, a structural unit derived from glycerin mono(meth)acrylate, or a structural unit derived from polypropylene glycol mono(meth)acrylate, from the viewpoints of improvements in applicability and moldability of the in-oil dispersion and from the viewpoints of improvement in processability and improvement in low-temperature bending resistance of the halogen-based resin composition.

In the polymer dispersant C, the content of the structural unit derived from the monomer (b) is 5 mass% or more, preferably 6 mass% or more, and more preferably 7 mass% or more, and is 20 mass% or less, preferably 18 mass% or less, and more preferably 15 mass% or less. In the polymer dispersant C, the content of the structural unit derived from the monomer (b) is 5 mass% or more and 20 mass% or less, preferably 6 mass% or more and 18 mass% or less, and more preferably 7 mass% or more and 15 mass% or less.

### Macromonomer Composed of Structural Unit Derived from Monomer (c)

The macromonomer composed of the structural unit derived from the monomer (c) is a macromonomer containing, as a structural unit thereof, a copolymer of the monomer (c) having a hydrophobic group and a molecular weight of less than 400, and imparts hydrophobicity to the polymer dispersant C.

Examples of the monomer (c) constituting the macromonomer are the same as those exemplified for the polymer dispersant A.

A weight average molecular weight of the macromonomer composed of the structural unit derived from the monomer (c) is preferably 3,000 or more and 20,000 or less.

The structural unit derived from the macromonomer composed of the structural unit derived from the monomer (c) contained in the polymer dispersant C is preferably a structural unit derived from a macromonomer composed of a structural unit derived from iso-butyl (meth)acrylate and a structural unit derived from a macromonomer composed of a structural unit derived from styrene, and more preferably a structural unit derived from a macromonomer composed of a structural unit derived from iso-butyl (meth)acrylate, from the viewpoints of improvements in applicability and moldability of the in-oil dispersion and from the viewpoints of improvement in processability and low-temperature bending resistance of the halogen-based resin composition.

In the polymer dispersant C, a content of the structural unit derived from the macromonomer composed of the structural unit derived from the monomer (c) is more than 60 mass%, preferably 62 mass% or more, and more preferably 65 mass% or more, and is 80 mass% or less, preferably 77 mass% or less, and more preferably 75 mass% or less. In the polymer dispersant C, the content of the structural unit derived from the macromonomer composed of the structural unit derived from the monomer (c) is more than 60 mass% and 80 mass% or less, preferably 62 mass% or more and 77 mass% or less, and more preferably 65 mass% or more and 75 mass% or less.

A weight average molecular weight of the polymer dispersant C is preferably 30,000 or more, more preferably 40,000 or more, and even more preferably 50,000 or more from the viewpoint of suppressing desorption from the inorganic filler, and is preferably 120,000 or less, more preferably 115,000 or less, even more preferably 110,000 or less, still more preferably 100,000 or less, even still more preferably 90,000 or less, even more preferably 80,000 or less, even still more preferably 70,000 or less, and even still more preferably 65,000 or less from the viewpoint of efficiently adsorbing on the inorganic filler. From the same viewpoint, the weight average molecular weight of the polymer dispersant C is preferably 30,000 or more and 120,000 or less, more preferably 30,000 or more and 115,000 or less, even more preferably 30,000 or more and 110,000 or less, still more preferably 40,000 or more and 100,000 or less, even still more preferably 40,000 or more and 90,000 or less, even still more preferably 40,000 or more and 80,000 or less, even still more preferably 50,000 or more and 70,000 or less, and even still more preferably 50,000 or more and 65,000 or less.

The weight average molecular weight is measured by the method shown in Examples.

### Method for Producing Polymer Dispersant

Examples of a method for producing the polymer dispersant include a method in which a monomer mixture containing a monomer represented by general formula (1), a monomer having a hydroxy group, and optionally a monomer having a hydrophobic group is copolymerized by a known polymerization method. Examples of a method for producing the polymer dispersant A include a method in which a monomer mixture containing a monomer (a), a monomer (b), and a monomer (c) is copolymerized by a known polymerization method. Examples of a method for producing the polymer dispersant B include a method in which a monomer mixture containing a monomer (d), the monomer (b), and optionally the monomer (c) is copolymerized by a known polymerization method. Examples of a method for producing the polymer dispersant C include a method in which a monomer mixture containing a macromonomer composed of structural units derived from the monomer (a), the monomer (b), and the monomer (c) is copolymerized by a known polymerization method. As the polymerization method, a solution polymerization method is preferable from the viewpoint that production is possible with general-purpose equipment.

A solvent used in the solution polymerization method is not limited as long as the monomers (a) to (d) are dissolved therein, but is preferably an aromatic solvent such as toluene or xylene, or a polar solvent such as an aliphatic alcohol, a ketone such as acetone or methyl ethyl ketone, an ether, or an ester, and more preferably toluene, methanol, ethanol, acetone or methyl ethyl ketone, and even more preferably toluene or ethanol. A single type of the solvent may be used alone, or a mixture of two or more types thereof may be used.

In the polymerization, a polymerization initiator or a chain transfer agent can be used.

As the polymerization initiator, known radical polymerization initiators including azo compounds such as dimethyl 2,2'-azobis(isobutyrate), 2,2'-azobis(2,4-dimethylvaleronitrile), and 2,2'-azobis(isobutyronitrile), and organic peroxides such as tert-butyl peroxyoctoate and benzoyl peroxide can be used from the viewpoint that stable polymerization is possible under a boiling point of the solvent. An amount of the radical polymerization initiator is preferably 0.1 parts by mass or more, and more preferably 0.3 parts by mass or more, and is preferably 5 parts by mass or less, and more preferably 4 parts by mass or less, per 100 parts by mass of the monomer mixture. The amount of the radical polymerization initiator is preferably 0.1 parts by mass or more and 5 parts by mass or less, and more preferably 0.3 parts by mass or more and 4 parts by mass or less, per 100 parts by mass of the monomer mixture.

As the chain transfer agent, known chain transfer agents including mercaptans such as octyl mercaptan, 2-mercaptoethanol, 3-mercapto-1,2-propanediol, and mercaptopropionic acid, and thiuram disulfides can be used from the viewpoint of easy adjustment of the molecular weight.

There is no limitation on the mode of chain polymerization of the monomers, and any polymerization mode such as random, block, or graft polymerization may be employed.

The monomer mixture may further contain a compound (crosslinking agent) containing two or more radically polymerizable carbon-carbon double bonds. When the monomer mixture contains the crosslinking agent, a content of the crosslinking agent in the mixture containing the crosslinking agent is preferably 3 mol% or less from the viewpoint of prevention of gelation of a reaction system. The content of the crosslinking agent in the monomer mixture is preferably 2 mol% or less, and more preferably 1 mol% or less.

Preferred polymerization conditions vary depending on the types of polymerization initiator, monomer, solvent, and the like to be used. From the viewpoint that polymerization is possible with general-purpose equipment, a polymerization temperature is usually preferably 30°C or higher, and more preferably 50°C or higher, and is preferably 95°C or lower, and more preferably 90°C or lower. The polymerization temperature is preferably 30°C or higher and 95°C or lower, and more preferably 50°C or higher and 90°C or lower. A polymerization time is preferably 1 hour or more, and more preferably 2 hours or more, and is preferably 20 hours or less, and more preferably 10 hours or less. The polymerization time is preferably 1 hour or more and 20 hours or less, and more preferably 2 hours or more and 10 hours or less. A polymerization atmosphere is preferably a nitrogen gas atmosphere or an atmosphere of an inert gas such as argon.

In the production of the polymer dispersant of the present invention, since a conversion rate of the monomer mixture is almost 100%, the content of each monomer used in the polymerization is substantially equal to the content of the structural unit derived from each monomer in each polymer dispersant.

### In-oil Dispersion

The in-oil dispersion of the present invention contains the polymer dispersant, an inorganic filler, and a compound having no group dissociating a hydrogen ion. The polymer dispersant contained in the in-oil dispersion is preferably any one of the polymer dispersant A, the polymer dispersant B, and the polymer dispersant C.

### Inorganic Filler

Examples of the inorganic filler contained in the in-oil dispersion of the present invention include calcium carbonate, talc, calcium silicate, aluminum oxide (alumina), titanium oxide, and magnesium oxide. A single type of inorganic filler may be used alone, or a mixture of two or more types thereof may be used. The inorganic filler is preferably aluminum oxide from the viewpoint of improving applicability and moldability of the in-oil dispersion and from the viewpoint of economic efficiency.

A median particle diameter of the inorganic filler in the in-oil dispersion of the present invention is preferably 0.01 µm or more, more preferably 0.05 µm or more, and even more preferably 0.1 µm or more, and is preferably 2 µm or less, more preferably 1.5 µm or less, and even more preferably 1 µm or less, from the viewpoints of improvements in applicability and moldability of the in-oil dispersion. From the same viewpoint, the median particle diameter of the inorganic filler is preferably 0.01 µm or more and 2 µm or less, more preferably 0.05 µm or more and 1.5 µm or less, and even more preferably 0.1 µm or more and 1 µm or less.

A content of the inorganic filler in the in-oil dispersion of the present invention is preferably 10 mass% or more, more preferably 15 mass% or more, and even more preferably 20 mass% or more, and is preferably 80 mass% or less, more preferably 75 mass% or less, and even more preferably 73 mass% or less, from the viewpoints of improvements in applicability and moldability of the in-oil dispersion. From the same viewpoint, the content of the inorganic filler in the in-oil dispersion is preferably 10 mass% or more and 80 mass% or less, more preferably 15 mass% or more and 75 mass% or less, and even more preferably 20 mass% or more and 73 mass% or less.

A mass ratio of the polymer dispersant to the inorganic filler (polymer dispersant/inorganic filler) in the in-oil dispersion of the present invention is preferably 0.0001 or more, more preferably 0.0005 or more, even more preferably 0.001 or more, and still more preferably 0.002 or more, and is preferably 10 or less, more preferably 5 or less, even more preferably 1 or less, still more preferably 0.5 or less, even still more preferably 0.1 or less, even still more preferably 0.05 or less, even still more preferably 0.03 or less, and even still more preferably 0.01 or less, from the viewpoints of improvements in applicability and moldability of the in-oil dispersion. From the same viewpoint, the mass ratio of the polymer dispersant to the inorganic filler (polymer dispersant/inorganic filler) is preferably 0.0001 or more and 10 or less, more preferably 0.0001 or more and 5 or less, even more preferably 0.0005 or more and 1 or less, still more preferably 0.0005 or more and 0.5 or less, even still more preferably 0.001 or more and 0.1 or less, even still more preferably 0.001 or more and 0.05 or less, even still more preferably 0.002 or more and 0.03 or less, and even still more preferably 0.002 or more and 0.01 or less.

### Compound Having No Group Dissociating Hydrogen Ion

The compound having no group dissociating a hydrogen ion may be any compound as long as it becomes a slurry state by being mixed with the polymer dispersant and the inorganic filler.

Examples of the group dissociating a hydrogen ion include, but are not limited to, a hydroxy group, an amino group, and a carboxy group, and a carbonyl group having a hydrogen element (has a strong acidity) that is easily deprotonated at the α-position so as to generate an enol by tautomerization when mixed with the inorganic filler.

Examples of the compound having no group dissociating a hydrogen ion in the in-oil dispersion of the present invention include non-aqueous solvents, e.g., aromatic compounds such as toluene, xylene, trimethylbenzene, ethylbenzene, and anisole; ketone compounds such as acetone, methyl ethyl ketone, 2-pentanone, 3-pentanone, and cyclohexanone; and ester compounds such as ethyl acetate, butyl acetate, ethylene glycol methyl ether acetate and propylene glycol methyl ether acetate.

An SP value as determined by a Fedors method of the compound having no group dissociating a hydrogen ion is preferably 7.5 (cal/cm³)^{1/2} or more, more preferably 7.8 (cal/cm³)^{1/2} or more, and even more preferably 8 (cal/cm³)^{1/2} or more, and preferably 12 (cal/cm³)^{1/2} or less, more preferably 11.5 (cal/cm³)^{1/2} or less, and even more preferably 11 (cal/cm³)^{1/2} or less. The SP value as determined by the Fedors method of the compound having no group dissociating a hydrogen ion is preferably 7.5 (cal/cm³)^{1/2} or more and 12 (cal/cm³)^{1/2} or less, more preferably 7.8 (cal/cm³)^{1/2} or more and 11.5 (cal/cm³)^{1/2} or less, and more preferably 8 (cal/cm³)^{1/2} or more and 11 (cal/cm³)^{1/2} or less.

A single type of the compound having no group dissociating a hydrogen ion may be used alone, or a mixture of two or more types thereof may be used. The compound having no group dissociating a hydrogen ion is preferably toluene, xylene, acetone, methyl ethyl ketone, cyclohexanone, ethyl acetate, butyl acetate, or propylene glycol methyl ether acetate, and more preferably cyclohexanone or propylene glycol methyl ether acetate, from the viewpoint of further improving the applicability and moldability of the in-oil dispersion.

A content of the compound having no group dissociating a hydrogen ion is preferably 19 mass% or more, more preferably 24 mass% or more, and even more preferably 26 mass% or more, and is preferably 89 mass% or less, more preferably 84 mass% or less, and even more preferably 79 mass% or less, from the viewpoints of improvements in applicability and moldability of the in-oil dispersion. From the same viewpoint, the content of the compound having no group dissociating a hydrogen ion is preferably 19 mass% or more and 89 mass% or less, more preferably 24 mass% or more and 84 mass% or less, and even more preferably 26 mass% or more and 79 mass% or less.

### Additive

The in-oil dispersion may optionally contain the same additives as those contained in the halogen-based resin composition which will be described later, as long as the effects of the present invention are not impaired.

### Method for Producing In-oil Dispersion

A method for producing the in-oil dispersion of the present invention includes mixing a polymer dispersant, an inorganic filler, and a compound having no group dissociating a hydrogen ion (non-aqueous solvent).

The in-oil dispersion can be prepared by mixing the polymer dispersant, the inorganic filler, and the compound having no group dissociating a hydrogen ion with a stirrer such as a mortar mixer, a Henschel mixer, a Banbury mixer, or a ribbon blender, and dispersing the polymer dispersant and the inorganic filler in the compound having no group dissociating a hydrogen ion.

### Halogen-based Resin Composition

The halogen-based resin composition of the present invention contains the polymer dispersant, an inorganic filler, a compound having no group dissociating a hydrogen ion, and a halogen-based resin. The polymer dispersant contained in the halogen-based resin composition is preferably any one of the polymer dispersant A, the polymer dispersant B, and the polymer dispersant C.

### Halogen-based Resin

In the present invention, the halogen-based resin means a homopolymer or copolymer of a halogen-containing monomer or a polymer modified with a halogen, and, from the viewpoint of easy availability, specific examples thereof include one or more selected from vinyl chloride resins, vinylidene chloride resins, chlorinated polyethylene, chlorinated polypropylene, chlorosulfonated polyethylene, chloroprene rubber, and the like. Preferably, the halogen-based resin composition of the present invention contains one or more selected from the group consisting of vinyl chloride resins, vinylidene chloride resins, and chloroprene rubber.

### Vinyl Chloride Resin

Examples of the vinyl chloride resin include a vinyl chloride homopolymer and additionally a copolymer of vinyl chloride and a monomer copolymerizable with vinyl chloride (hereinafter also referred to as "vinyl chloride copolymer"), and a graft copolymer prepared by graft copolymerization of vinyl chloride with a polymer other than the vinyl chloride copolymer.

The monomer copolymerizable with vinyl chloride may be any monomer having a reactive double bond in the molecule from the viewpoint of easy copolymerization, and examples thereof include α-olefins such as ethylene, propylene and butylene; vinyl esters such as vinyl acetate and vinyl propionate; vinyl ethers such as butyl vinyl ether and cetyl vinyl ether; esters of (meth)acrylic acid such as methyl (meth)acrylate, ethyl (meth)acrylate and phenyl (meth)acrylate; aromatic vinyls such as styrene and α-methylstyrene; halogenated vinyls such as vinylidene chloride and vinyl fluoride; and N-substituted maleimides such as N-phenylmaleimide and N-cyclohexylmaleimide.

The polymer other than the vinyl chloride copolymer may be any polymer that can be graft-copolymerized with vinyl chloride from the viewpoint of easy availability, and examples thereof include an ethylene-vinyl acetate copolymer, an ethylene-vinyl acetate-carbon monoxide copolymer, an ethylene-ethyl acrylate copolymer, an ethylene-ethyl acrylate-carbon monoxide copolymer, an ethylene-methyl methacrylate copolymer, an ethylene-propylene copolymer, an acrylonitrile-butadiene copolymer, and polyurethane.

Among the above halogen-based resins, from the viewpoint of improvement in low-temperature bending resistance of the halogen-based resin composition, one or more selected from the group consisting of vinyl chloride-based resins such as vinyl chloride resins, ethylene-vinyl chloride copolymers, vinyl acetate-vinyl chloride copolymers, and polyurethane-grafted vinyl chloride copolymers, vinylidene chloride, and chloroprene rubber are preferable, one or more selected from the group consisting of vinyl chloride resins, vinylidene chloride resins, and chloroprene rubber are more preferable, and vinyl chloride resins are even more preferable.

A content of the polymer dispersant in the halogen-based resin composition is preferably 0.001 parts by mass or more and 0.8 parts by mass or less per 100 parts by mass of the halogen-based resin from the viewpoints of improvement in processability and improvement in low-temperature bending resistance of the halogen-based resin composition.

### Inorganic Filler

Examples of the inorganic filler contained in the halogen-based resin composition of the present invention include the same inorganic fillers as those exemplified for the in-oil dispersion. The inorganic filler is preferably calcium carbonate from the viewpoint of economic efficiency.

The median particle diameter of the inorganic filler in the halogen-based resin composition of the present invention is preferably 0.01 µm or more, more preferably 0.05 µm or more, and even more preferably 0.1 µm or more, and is preferably 20 µm or less, more preferably 15 µm or less, and even more preferably 10 µm or less, from the viewpoints of improvement in processability and improvement in low-temperature bending resistance of the halogen-based resin composition. From the same viewpoint, the median particle diameter of the inorganic filler in the halogen-based resin composition is preferably 0.01 µm or more and 20 µm or less, more preferably 0.05 µm or more and 15 µm or less, and even more preferably 0.1 µm or more and 10 µm or less.

From the viewpoint of cost reduction of the halogen-based resin composition, an amount of the inorganic filler in the halogen-based resin composition is preferably 1 part by mass or more, more preferably 3 parts by mass or more, and even more preferably 5 parts by mass or more, and is preferably 150 parts by mass or less, more preferably 140 parts by mass or less, and even more preferably 130 parts by mass or less, per 100 parts by mass of the halogen-based resin. From the same viewpoint, the amount of the inorganic filler in the halogen-based resin composition is preferably 1 part by mass or more and 150 parts by mass or less, more preferably 3 parts by mass or more and 140 parts by mass or less, and even more preferably 5 parts by mass or more and 130 parts by mass or less per 100 parts by mass of the halogen-based resin.

A mass ratio of the polymer dispersant to the inorganic filler (polymer dispersant/inorganic filler) in the halogen-based resin composition is preferably 0.0001 or more, more preferably 0.0005 or more, even more preferably 0.001 or more, and still more preferably 0.002 or more, and is preferably 10 or less, more preferably 5 or less, even more preferably 1 or less, still more preferably 0.5 or less, even still more preferably 0.1 or less, even still more preferably 0.05 or less, even still more preferably 0.03 or less, and even still more preferably 0.01 or less, from the viewpoints of improvement in processability and improvement in low-temperature bending resistance of the halogen-based resin composition. From the same viewpoint, the mass ratio of the polymer dispersant to the inorganic filler (polymer dispersant/inorganic filler) in the halogen-based resin composition is preferably 0.0001 or more and 10 or less, more preferably 0.0001 or more and 5 or less, even more preferably 0.0005 or more and 1 or less, still more preferably 0.0005 or more and 0.5 or less, even still more preferably 0.001 or more and 0.1 or less, even still more preferably 0.001 or more and 0.05 or less, even still more preferably 0.002 or more and 0.03 or less, and even still more preferably 0.002 or more and 0.01 or less.

### Compound Having No Group Dissociating Hydrogen Ion

Examples of the compound having no group dissociating a hydrogen ion in the halogen-based resin composition of the present invention include compounds usually used as plasticizers for halogen-based resins.

Examples of the compounds usually used as plasticizers for halogen-based resins include dioctyl phthalate (DOP) and diisononyl phthalate (DINP), and additionally phthalic acid esters of alcohols having from 1 to 13 carbons such as dimethyl phthalate, diethyl phthalate, dibutyl phthalate, and diundecyl phthalate; trimellitic acid esters of alcohols having from 6 to 10 carbons such as tris(2-ethylhexyl) trimellitate, trioctyl trimellitate, and tridecyl trimellitate; adipic acid esters, azelaic acid esters, sebacic acid esters, phosphoric acid esters, polyesters, epoxies, fatty acid esters, and pyromellitic acid esters.

The SP value as determined by the Fedors method of the compound having no group dissociating a hydrogen ion is preferably 7.5 (cal/cm³)^{1/2} or more, more preferably 7.8 (cal/cm³)^{1/2} or more, and even more preferably 8 (cal/cm³)^{1/2} or more, and is preferably 11.5 (cal/cm³)^{1/2} or less, more preferably 10.5 (cal/cm³)^{1/2} or less, and even more preferably 10 (cal/cm³)^{1/2} or less, from the viewpoint of high compatibility with the halogen-based resin. From the same viewpoint, the SP value as determined by the Fedors method of the compound having no group dissociating a hydrogen ion is preferably 7.5 (cal/cm³)^{1/2} or more and 11.5 (cal/cm³)^{1/2} or less, more preferably 7.8 (cal/cm³)^{1/2} or more and 10.5 (cal/cm³)^{1/2} or less, and even more preferably 8 (cal/cm³)^{1/2} or more and 10 (cal/cm³)^{1/2} or less.

A single type of the compound having no group dissociating a hydrogen ion may be used alone, or a mixture of two or more types thereof may be used. From the viewpoint of improvement in processability and from the viewpoint of improvement in low-temperature bending resistance of the halogen-based resin composition, the compound having no group dissociating a hydrogen ion is preferably dialkyl phthalate and trialkyl trimellitate, and is more preferably bis(2-ethylhexyl) phthalate and tri(2-ethylhexyl) trimellitate.

A content of the compound having no group dissociating a hydrogen ion in the halogen-based resin composition is preferably 5 parts by mass or more, more preferably 10 parts by mass or more, and even more preferably 15 parts by mass or more per 100 parts by mass of the halogen-based resin from the viewpoint of exhibiting the plasticizing effect of the halogen-based resin composition, and is preferably 170 parts by mass or less, more preferably 160 parts by mass or less, and even more preferably 150 parts by mass or less from the viewpoints of improvement in processability and improvement in low-temperature bending resistance of the halogen-based resin composition. From the same viewpoint, the content of the compound having no group dissociating a hydrogen ion in the halogen-based resin composition is preferably 5 parts by mass or more and 170 parts by mass or less, more preferably 10 parts by mass or more and 160 parts by mass or less, and even more preferably 15 parts by mass or more and 150 parts by mass or less per 100 parts by mass of the halogen-based resin.

### Additive

The halogen-based resin composition may optionally contain additives such as a stabilizer, a processing aid, a colorant, an antioxidant, an ultraviolet absorber, an antistatic agent, and a lubricant, as long as the effects of the present invention are not impaired.

Examples of the stabilizer include metal soap compounds such as lithium stearate, magnesium stearate, magnesium laurate, calcium ricinoleate, calcium stearate, barium laurate, barium ricinoleate, barium stearate, zinc octylate, zinc laurate, zinc ricinoleate, and zinc stearate; organotin-based compounds such as dimethyltin bis-2-ethylhexyl thioglycolate, dibutyltin maleate, dibutyltin bisbutyl maleate, and dibutyltin dilaurate; and antimony mercaptide compounds. A content of the stabilizer is from 0.1 to 20 parts by mass per 100 parts by mass of the halogen-based resin.

Examples of the processing aid include liquid paraffin, polyethylene wax, stearic acid, stearic acid amide, ethylenebis(stearic acid amide), butyl stearate and calcium stearate. A content of the processing aid is from 0.1 to 20 parts by mass per 100 parts by mass of the halogen-based resin.

Examples of the colorant include carbon black, lead sulfide, white carbon, titanium white, lithopone, red iron oxide, antimony sulfide, chrome yellow, chrome green, cobalt blue, and molybdenum orange. A content of the colorant is from 1 to 100 parts by mass per 100 parts by mass of the halogen-based resin.

Examples of the antioxidant include phenol-based compounds such as 2,6-di-tertbutylphenol, tetrakis[methylene-3-(3,5 tert-butyl-4 hydroxyphenol)propionate]methane, and 2-hydroxy-4 methoxybenzophenone; sulfur-based compounds such as alkyl disulfide, thiodipropionic acid ester, and benzothiazole; phosphate-based compounds such as trisononylphenyl phosphite, diphenylisodecyl phosphite, triphenyl phosphite, and tris(2,4-di-tert-butylphenyl) phosphite; and organic metal-based compounds such as zinc dialkyldithiophosphate and zinc diaryldithiophosphate. A content of the antioxidant is from 0.2 to 20 parts by mass per 100 parts by mass of the halogen-based resin.

Examples of the ultraviolet absorber include salicylate-based compounds such as phenyl salicylate and p-tert-butylphenyl salicylate; benzophenone-based compounds such as 2-hydroxy-4-n-octoxybenzophenone and 2-hydroxy-4-methoxybenzophenone; benzotriazole-based compounds such as 5-methyl-1H-benzotriazole and 1-dioctylaminomethylbenzotriazole; and additionally cyanoacrylate-based compounds. A content of the ultraviolet absorber is from 0.1 to 10 parts by mass per 100 parts by mass of the halogen-based resin.

Examples of the antistatic agent include anionic antistatic agents of an alkyl sulfonate type, an alkyl ether carboxylic acid type, and a dialkyl sulfosuccinate type; nonionic antistatic agents such as polyethylene glycol derivatives, sorbitan derivatives, and diethanolamine derivatives; cationic antistatic agents such as quaternary ammonium salts of an alkylamidoamine type and an alkyldimethylbenzyl type, and organic acid salts and hydrochloride salts of an alkylpyridinium type; and amphoteric antistatic agents such as an alkylbetaine type and an alkylimidazoline type. A content of the antistatic agent is from 0.1 to 10 parts by mass per 100 parts by mass of the halogen-based resin.

Examples of the lubricant include silicone, liquid paraffin, paraffin wax, fatty acids such as stearic acid and lauric acid and metal salts thereof, fatty acid amides, fatty acid wax, and higher fatty acid wax. A content of the lubricant is from 0.1 to 10 parts by mass per 100 parts by mass of the halogen-based resin.

### Method for Producing Halogen-based Resin Composition

A method for producing the halogen-based resin composition of the present invention includes mixing, for example, a polymer dispersant, an inorganic filler, a compound having no group dissociating a hydrogen ion, and a halogen-based resin.

The halogen-based resin composition can be prepared as a slurry of the halogen-based resin composition by mixing a polymer dispersant, an inorganic filler, a compound having no group dissociating a hydrogen ion, a halogen-based resin, and optionally various additives with a stirrer such as a mortar mixer, a Henschel mixer, a Banbury mixer, or a ribbon blender. Further, a halogen-based resin composition in the form of a mixed powder, a pellet, or a paste can be prepared by melt molding using a kneader such as a conical twin-screw extruder, a parallel twin-screw extruder, a single-screw extruder, a co-kneader type kneader, or a roll kneader.

Mixing and melt molding conditions may be conditions used in a usual method for producing a halogen-based resin composition.

The method for producing the halogen-based resin composition may include mixing, for example, a slurry composition composed of a polymer dispersant, an inorganic filler, a compound having no group dissociating a hydrogen ion; a halogen-based resin; and optionally various additives. The slurry composition and the halogen-based resin can be mixed by the stirrer to prepare a slurry of the halogen-based resin composition. Alternatively, a halogen-based resin composition in the form of a mixed powder, a pellet, or a paste may be prepared by melt molding with the kneader.

The mixed powder or pellet of the halogen-based resin composition can be molded into a desired shape by a known method such as extrusion-molding, injection-molding, calendering, press-molding or blow-molding. The paste-shaped halogen-based resin composition can be molded into a desired shape by a known method such as spread molding, dip molding, gravure molding, or screen processing.

### Use as Dispersant

As described above, the compound (I) constituting the polymer dispersant can be used as a dispersant. The compound (I) can be preferably used for dispersing an inorganic filler in a compound having no group dissociating a hydrogen ion. Examples of the inorganic filler and the compound having no group dissociating a hydrogen ion include the inorganic fillers and the compounds (non-aqueous solvents) having no group dissociating a hydrogen ion, which are exemplified for the in-oil dispersion and the halogen-based resin composition. The compound (I) is preferably any one of the compound A constituting the polymer dispersant A, the compound B constituting the polymer dispersant B, and the compound C constituting the polymer dispersant C from the viewpoint of effectively dispersing the inorganic filler in the compound having no group dissociating a hydrogen ion.

### Use of Polymer Dispersant for Producing In-oil Dispersion and Halogen-based Resin Composition

As described above, the polymer dispersant of the present invention can be used for producing an in-oil dispersion and a halogen-based resin composition. Examples of the use of the polymer dispersant for the production of the in-oil dispersion and the halogen-based resin composition include the uses exemplified for the methods for producing the in-oil dispersion and the halogen-based resin composition described above. The polymer dispersant used in the methods for producing the in-oil dispersion and the halogen-based resin composition is preferably any one of the polymer dispersant A, the polymer dispersant B, and the polymer dispersant C.

The present invention includes the following aspects.
<1> A polymer dispersant A containing:
   30 mass% or more and 75 mass% or less of a structural unit derived from a monomer (a) having a hydrophobic group, the monomer (a) having a molecular weight of less than 400;
   20 mass% or more and 65 mass% or less of a structural unit derived from a monomer (b) represented by general formula (1) below, the monomer (b) having a molecular weight of 400 or more and 2,000 or less; and
   5 mass% or more and 50 mass% or less of a structural unit derived from a monomer (c) having a hydroxy group, the monomer (c) having a molecular weight of less than 400: 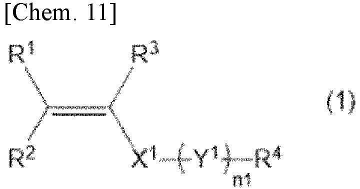
   where
   R¹, R², and R³ are each selected from a hydrogen element or a methyl group;
   X¹ represents an oxygen element, an ester group, an amide group, or -CH₂O-;
   Y¹ represents a repeating unit of an alkylene glycol having from 2 to 4 carbons;
   R⁴ represents a hydrogen element or an alkyl group having from 1 to 4 carbons; and n1 represents the number of repeating units of the alkylene glycol.
<2> A polymer dispersant containing:
   a structural unit derived from a monomer represented by general formula (1) below; and
   a structural unit derived from a monomer having a hydroxy group: 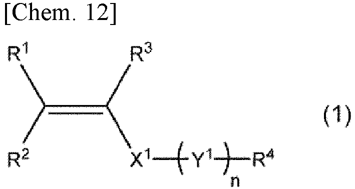
   where
   R¹, R², and R³ are each selected from a hydrogen element or a methyl group;
   X¹ represents an oxygen element, an ester group, an amide group, or -CH₂O-;
   Y¹ represents a repeating unit of an alkylene glycol having from 2 to 4 carbons;
   R⁴ represents a hydrogen element or a hydrocarbon group having from 1 to 20 carbons; and n represents the number of repeating units of the alkylene glycol.
<3> A polymer dispersant A containing:
   20 mass% or more and 65 mass% or less of a structural unit derived from a monomer (a) represented by general formula (1a) below, the monomer (a) having a molecular weight of 400 or more and 2,000 or less;
   5 mass% or more and 50 mass% or less of a structural unit derived from a monomer (b) having a hydroxy group, the monomer (b) having a molecular weight of less than 400; and
   30 mass% or more and 75 mass% or less of a structural unit derived from a monomer (c) having a hydrophobic group, the monomer (c) having a molecular weight of less than 400: 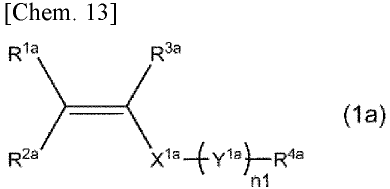
   where
   R^{1a}, R^{2a}, and R^{3a} are each selected from a hydrogen element or a methyl group;
   X^{1a} represents an oxygen element, an ester group, an amide group, or -CH₂O-;
   Y^{1a} represents a repeating unit of an alkylene glycol having from 2 to 4 carbons;
   R^{4a} represents a hydrogen element or an alkyl group having from 1 to 4 carbons; and n1 represents the number of repeating units of the alkylene glycol.
<4> The polymer dispersant A according to <3>, wherein the polymer dispersant A contains 30 mass% or more and 45 mass% or less of the structural unit derived from the monomer (a), 13 mass% or more and 30 mass% or less of the structural unit derived from the monomer (b), and 38 mass% or more and 50 mass% or less of the structural unit derived from the monomer (c).
<5> The polymer dispersant A according to <3> or <4>, wherein the structural unit derived from the monomer (a) is a structural unit derived from methoxypolyethylene glycol (meth)acrylate, the structural unit derived from the monomer (b) is a structural unit derived from glycerin mono(meth)acrylate, and the structural unit derived from the monomer (c) is a structural unit derived from stearyl (meth)acrylate.
<6> The polymer dispersant A according to any one of <3> to <5>, wherein the polymer dispersant A contains 37 mass% or more and 45 mass% or less of the structural unit derived from the monomer (b), 13 mass% or more and 20 mass% or less of the structural unit derived from the monomer (a), and 38 mass% or more and 50 mass% or less of the structural unit derived from the monomer (c), the structural unit derived from the monomer (a) is a structural unit derived from methoxypolyethylene glycol (meth)acrylate, the structural unit derived from the monomer (b) is a structural unit derived from glycerin mono(meth)acrylate, and the structural unit derived from the monomer (c) is a structural unit derived from stearyl (meth)acrylate.
<7> The polymer dispersant A according to any one of <3> to <6>, wherein the polymer dispersant A has a weight average molecular weight of 20,000 or more and 30,000 or less.
<8> The polymer dispersant A according to any one of <3> to <7>, wherein the number n1 of repeating units of the alkylene glycol is 15 or more and 30 or less.
<9> A polymer dispersant B containing:
   45 mass% or more and 95 mass% or less of a structural unit derived from a monomer (d) represented by general formula (1b) below, the monomer (d) having a molecular weight of 300 or more and 2,000 or less;
   5 mass% or more and 40 mass% or less of a structural unit derived from a monomer (b) having a hydroxy group, the monomer (b) having a molecular weight of less than 400; and
   0 mass% or more and 20 mass% or less of a structural unit derived from a monomer (c) having a hydrophobic group, the monomer (c) having a molecular weight of less than 400: 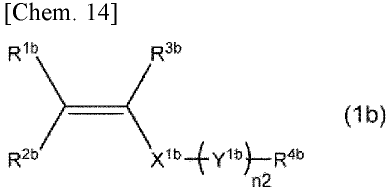
   where
   R⁵, R⁶, and R⁷ are each selected from a hydrogen element or a methyl group; X² represents an oxygen element, an ester group, an amide group, or -CH₂O-;
   Y² represents a repeating unit of an alkylene glycol having from 2 to 4 carbons;
   R⁸ represents a hydrocarbon group having from 6 to 18 carbons; and n2 represents the number of repeating units of the alkylene glycol.
<10> The polymer dispersant B according to <9>, wherein the polymer dispersant B contains 60 mass% or more and 88 mass% or less of the structural unit derived from the monomer (d), and 12 mass% or more and 40 mass% or less of the structural unit derived from the monomer (b), and contains no structural unit derived from the monomer (c).
<11> The polymer dispersant B according to <9> or <10>, wherein the polymer dispersant B contains 75 mass% or more and 88 mass% or less of a structural unit derived from lauroxypolyethylene glycol (meth)acrylate as the structural unit derived from the monomer (d), and 12 mass% or more and 25 mass% or less of a structural unit derived from glycerin mono(meth)acrylate or a structural unit derived from 2-hydroxyethyl (meth)acrylate as the structural unit derived from the monomer (b).
<12> The polymer dispersant B according to any one of <9> to <11>, wherein the polymer dispersant B contains 80 mass% or more and 88 mass% or less of a structural unit derived from lauroxypolyethylene glycol (meth)acrylate as the structural unit derived from the monomer (d), and 12 mass% or more and 20 mass% or less of a structural unit derived from 2-hydroxyethyl (meth)acrylate as the structural unit derived from the monomer (b).
<13> The polymer dispersant B according to <9> or <10>, wherein the polymer dispersant B contains 12 mass% or more and 25 mass% or less of a structural unit derived from glycerin mono(meth)acrylate as the structural unit derived from the monomer (b), and 75 mass% or more and 88 mass% or less of a structural unit derived from stearoxypolyethylene glycol (meth)acrylate as the structural unit derived from the monomer (d).
<14> The polymer dispersant B according to <9> or <10>, wherein the polymer dispersant B contains 75 mass% or more and 88 mass% or less of a structural unit derived from 2-ethylhexyloxypolypropylene glycol polyethylene glycol (meth)acrylate as the structural unit derived from the monomer (d), and 12 mass% or more and 25 mass% or less of a structural unit derived from glycerin mono(meth)acrylate as the structural unit derived from the monomer (b).
<15> The polymer dispersant B according to <9>, wherein the polymer dispersant B contains 55 mass% or more and 88 mass% or less of the structural unit derived from the monomer (d), 8 mass% or more and 12 mass% or less of the structural unit derived from the monomer (b), and 4 mass% or more and 8 mass% or less of the structural unit derived from the monomer (c).
<16> The polymer dispersant B according to <9> or <15>, wherein the structural unit derived from the monomer (d) is a structural unit derived from stearoxypolyethylene glycol (meth)acrylate, the structural unit derived from the monomer (b) is a structural unit derived from 2-hydroxyethyl (meth)acrylate, and the structural unit derived from the monomer (c) is a structural unit derived from 2-ethylhexyl (meth)acrylate.
<17> The polymer dispersant B according to any one of <9> to <16>, wherein the polymer dispersant B has a weight average molecular weight of 10,000 or more and 110,000 or less.
<18> The polymer dispersant B according to any one of <9> to <11>, wherein the polymer dispersant B contains 80 mass% or more and 88 mass% or less of a structural unit derived from lauroxypolyethylene glycol (meth)acrylate as the structural unit derived from the monomer (d), and 12 mass% or more and 20 mass% or less of a structural unit derived from glycerin mono(meth)acrylate as the structural unit derived from the monomer (b), and has a weight average molecular weight of 14,000 or more and 17,000 or less.
<19> The polymer dispersant B according to any one of <9> to <18>, wherein the number n2 of repeating units of the alkylene glycol is 4 or more and 35 or less.
<20> A polymer dispersant C containing:
   10 mass% or more and 40 mass% or less of a structural unit derived from a monomer (d) represented by the general formula (1b), the monomer (d) having a molecular weight of 300 or more and 2,000 or less;
   5 mass% or more and 20 mass% or less of a structural unit derived from a monomer (b) having a hydroxy group, the monomer (b) having a molecular weight of less than 400; and
   60 mass% or more and 80 mass% or less of a structural unit derived from a macromonomer composed of a structural unit derived from a monomer (c) having a hydrophobic group, the monomer (c) having a molecular weight of less than 400: 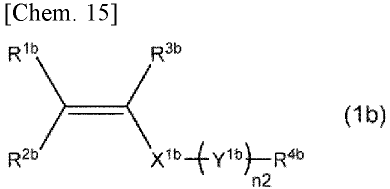
   where
   R^{1b}, R^{2b}, and R^{3b} are each selected from a hydrogen element or a methyl group;
   X^{1b} represents an oxygen element, an ester group, an amide group, or -CH₂O-;
   Y^{1b} represents a repeating unit of an alkylene glycol having from 2 to 4 carbons;
   R^{4b} represents a hydrocarbon group having from 6 to 18 carbons; and n2 represents the number of repeating units of the alkylene glycol.
<21> The polymer dispersant C according to <20>, wherein the polymer dispersant C contains 15 mass% or more and 30 mass% or less of the structural unit derived from the monomer (d), 7 mass% or more and 15 mass% or less of the structural unit derived from the monomer (b), and 65 mass% or more and 75 mass% or less of the structural unit derived from the monomer (c).
<22> The polymer dispersant C according to <20> or <21>, wherein the structural unit derived from the monomer (d) is a structural unit derived from 2-ethylhexyloxypolyethylene glycol methacrylate, the structural unit derived from the monomer (b) is a structural unit derived from 2-hydroxyethyl methacrylate, and the structural unit derived from the monomer (c) is a structural unit derived from a polystyrene macromonomer.
<23> The polymer dispersant C according to any one of <20> to <22>, wherein the polymer dispersant C contains 15 mass% or more and 30 mass% or less of a structural unit derived from 2-ethylhexyloxypolyethylene glycol methacrylate as the structural unit derived from the monomer (d), 7 mass% or more and 15 mass% or less of a structural unit derived from 2-hydroxyethyl methacrylate as the structural unit derived from the monomer (b), and 65 mass% or more and 75 mass% or less of a structural unit derived from a polystyrene macromonomer as the structural unit derived from the monomer (c).
<24> The polymer dispersant according to <20> or <21>, wherein the structural unit derived from the monomer (d) is a structural unit derived from 2-ethylhexyloxypolyethylene glycol methacrylate, the structural unit derived from the monomer (b) is a structural unit derived from 2-hydroxyethyl methacrylate, and the structural unit derived from the monomer (c) is a structural unit derived from a polyiso-butyl methacrylate macromonomer.
<25> The polymer dispersant C according to any one of <20>, <21> and <24>, wherein the polymer dispersant C contains 15 mass% or more and 30 mass% or less of a structural unit derived from 2-ethylhexyloxypolyethylene glycol methacrylate as the structural unit derived from the monomer (d), 7 mass% or more and 15 mass% or less of a structural unit derived from 2-hydroxyethyl methacrylate as the structural unit derived from the monomer (b), and 65 mass% or more and 75 mass% or less of a structural unit of a polyiso-butyl methacrylate macromonomer as the structural unit derived from the monomer (c).
<26> The polymer dispersant C according to any one of <20> to <25>, wherein the polymer dispersant C has a weight average molecular weight of 50,000 or more and 65,000 or less.
<27> The polymer dispersant C according to any one of <20> to <23> and <26>, wherein the polymer dispersant C contains 15 mass% or more and 30 mass% or less of a structural unit derived from 2-ethylhexyloxypolyethylene glycol methacrylate as the structural unit derived from the monomer (d), 7 mass% or more and 15 mass% or less of a structural unit derived from 2-hydroxyethyl methacrylate as the structural unit derived from the monomer (b), and 65 mass% or more and 75 mass% or less of a structural unit derived from a polystyrene macromonomer as the structural unit derived from the monomer (c), and has a weight average molecular weight of 50,000 or more and 65,000 or less.
<28> The polymer dispersant C according to any one of <20>, <21> and <24> to <26>, wherein the polymer dispersant C contains 15 mass% or more and 30 mass% or less of a structural unit derived from 2-ethylhexyloxypolyethylene glycol methacrylate as the structural unit derived from the monomer (d), 7 mass% or more and 15 mass% or less of a structural unit derived from 2-hydroxyethyl methacrylate as the structural unit derived from the monomer (b), and 65 mass% or more and 75 mass% or less of a structural unit of a polyiso-butyl methacrylate macromonomer as the structural unit derived from the monomer (c), and has a weight average molecular weight of 50,000 or more and 65,000 or less.
<29> The polymer dispersant C according to any one of <20> to <28>, wherein the number n2 of repeating units of the alkylene glycol is 4 or more and 35 or less.
<30> The polymer dispersant according to any one of <1> to <29>, wherein the polymer dispersant is used for a compound having no group dissociating a hydrogen ion.
<31> The polymer dispersant according to <30>, wherein the compound having no group dissociating a hydrogen ion is selected from cyclohexanone or propylene glycol methyl ether acetate.
<32> The polymer dispersant according to <31>, wherein the compound having no group dissociating a hydrogen ion is cyclohexanone.
<33> The polymer dispersant according to <31>, wherein the compound having no group dissociating a hydrogen ion is propylene glycol methyl ether acetate.
<34> The polymer dispersant according to <30>, wherein the compound having no group dissociating a hydrogen ion is dialkyl phthalate.
<35> The polymer dispersant according to <30>, wherein the compound having no group dissociating a hydrogen ion is trialkyl trimellitate.
<36> An in-oil dispersion containing:
   the polymer dispersant according to any one of <1> to <29>;
   an inorganic filler; and
   a compound having no group dissociating a hydrogen ion.
<37> The in-oil dispersion according to <36>, wherein the compound having no group dissociating a hydrogen ion is selected from the group consisting of toluene, xylene, acetone, methyl ethyl ketone, cyclohexanone, ethyl acetate, butyl acetate, and propylene glycol methyl ether acetate.
<38> The in-oil dispersion according to <37>, wherein the compound having no group dissociating a hydrogen ion is selected from cyclohexanone or propylene glycol methyl ether acetate.
<39> The in-oil dispersion according to any one of <36> to <38>, wherein the compound having no group dissociating a hydrogen ion is cyclohexanone.
<40> The in-oil dispersion according to any one of <36> to <38>, wherein the compound having no group dissociating a hydrogen ion is propylene glycol methyl ether acetate.
<41> The in-oil dispersion according to any one of <36> to <38>, wherein the compound having no group dissociating a hydrogen ion is dialkyl phthalate.
<42> The in-oil dispersion according to any one of <36> to <38>, wherein the compound having no group dissociating a hydrogen ion is trialkyl trimellitate.
<43> The in-oil dispersion according to any one of <36> to <42>, wherein the inorganic filler is aluminum oxide.
<44> The in-oil dispersion according to any one of <36> to <42>, wherein the inorganic filler is calcium carbonate.
<45> The in-oil dispersion according to any one of <36> to <44>, wherein a content of the inorganic filler is 10 mass% or more and 80 mass% or less.
<46> The in-oil dispersion according to any one of <36> to <45>, wherein a mass ratio of the polymer dispersant to the inorganic filler (polymer dispersant/inorganic filler) is 0.002 or more and 0.01 or less.
<47> A halogen-based resin composition containing:
   the polymer dispersant according to any one of <1> to <35>;
   an inorganic filler;
   a compound having no group dissociating a hydrogen ion; and
   a halogen-based resin.
<48> The halogen-based resin composition according to <47>, wherein an SP value as determined by a Fedors method of the compound having no group dissociating a hydrogen ion is 7.5 (cal/cm³)^{1/2} or more and 11.5 (cal/cm³)^{1/2} or less.
<49> The halogen-based resin composition according to <47> or <48>, wherein the compound having no group dissociating a hydrogen ion is selected from dialkyl phthalate or trialkyl trimellitate.
<50> The halogen-based resin composition according to <49>, wherein the compound having no group dissociating a hydrogen ion is selected from di(2-ethylhexyl) phthalate or tri(2-ethylhexyl) trimellitate.
<51> The halogen-based resin composition according to any one of <47> to <50>, wherein the inorganic filler is calcium carbonate.
<52> The halogen-based resin composition according to any one of <47> to <51>, wherein a content of the calcium carbonate is 1 part by mass or more and 150 parts by mass or less per 100 parts by mass of the halogen-based resin.
<53> The halogen-based resin composition according to any one of <47> to <52>, wherein a mass ratio of the polymer dispersant to the calcium carbonate (polymer dispersant/inorganic filler) is 0.002 or more and 0.01 or less.
<54> An in-oil dispersion containing:
   a polymer dispersant A containing 37 mass% or more and 45 mass% or less of a structural unit derived from a monomer (a), 13 mass% or more and 20 mass% or less of a structural unit derived from a monomer (b), and 38 mass% or more and 50 mass% or less of a structural unit derived from a monomer (c), the structural unit derived from the monomer (a) being a structural unit derived from methoxypolyethylene glycol (meth)acrylate, the structural unit derived from the monomer (b) being a structural unit derived from glycerin mono(meth)acrylate, and the structural unit derived from the monomer (c) being a structural unit derived from stearyl (meth)acrylate;
   aluminum oxide as an inorganic filler; and
   cyclohexanone as a compound having no group dissociating a hydrogen ion.
<55> An in-oil dispersion containing:
   a polymer dispersant B containing 55 mass% or more and 88 mass% or less of a structural unit derived from a monomer (d), 8 mass% or more and 12 mass% or less of a structural unit derived from a monomer (b), and 4 mass% or more and 8 mass% or less of a structural unit derived from a monomer (c), the structural unit derived from the monomer (b) being a structural unit derived from 2-hydroxyethyl (meth)acrylate, the structural unit derived from the monomer (d) being a structural unit derived from stearoxypolyethylene glycol (meth)acrylate, and the structural unit derived from the monomer (c) being a structural unit derived from 2-ethylhexyl (meth)acrylate;
   aluminum oxide as an inorganic filler; and
   propylene glycol methyl ether acetate as a compound having no group dissociating a hydrogen ion.
<56> An in-oil dispersion containing:
   a polymer dispersant C containing 15 mass% or more and 30 mass% or less of a structural unit derived from 2-ethylhexyloxypolyethylene glycol methacrylate as a structural unit derived from a monomer (d), 7 mass% or more and 15 mass% or less of a structural unit derived from 2-hydroxyethyl methacrylate as a structural unit derived from a monomer (b), and 65 mass% or more and 75 mass% or less of a structural unit derived from a polystyrene macromonomer as a structural unit derived from a monomer (c), the polymer dispersant C having a weight average molecular weight of 50,000 or more and 65,000 or less;
   aluminum oxide as an inorganic filler; and
   propylene glycol methyl ether acetate as a compound having no group dissociating a hydrogen ion.
<57> An in-oil dispersion containing:
   a polymer dispersant C containing 15 mass% or more and 30 mass% or less of a structural unit derived from 2-ethylhexyloxypolyethylene glycol methacrylate as a structural unit derived from a monomer (d), 7 mass% or more and 15 mass% or less of a structural unit derived from 2-hydroxyethyl methacrylate as a structural unit derived from a monomer (b), and 65 mass% or more and 75 mass% or less of a structural unit of a polyiso-butyl methacrylate macromonomer as a structural unit derived from a monomer (c), the polymer dispersant having a weight average molecular weight of 50,000 or more and 65,000 or less;
   aluminum oxide as an inorganic filler; and
   propylene glycol methyl ether acetate as a compound having no group dissociating a hydrogen ion.
<58> A slurry mixture containing:
   a polymer dispersant B containing 80 mass% or more and 88 mass% or less of a structural unit derived from lauroxypolyethylene glycol (meth)acrylate as a structural unit derived from a monomer (d), and 12 mass% or more and 20 mass% or less of a structural unit derived from glycerin mono(meth)acrylate as a structural unit derived from a monomer (b), the polymer dispersant B having a weight average molecular weight of 14,000 or more and 17,000 or less;
   calcium carbonate as an inorganic filler; and
   dialkyl phthalate as a compound having no group dissociating a hydrogen ion.
<59> A slurry mixture containing:
   a polymer dispersant C containing 15 mass% or more and 30 mass% or less of a structural unit derived from 2-ethylhexyloxypolyethylene glycol methacrylate as a structural unit derived from a monomer (d), 7 mass% or more and 15 mass% or less of a structural unit derived from 2-hydroxyethyl methacrylate as a structural unit derived from a monomer (b), and 65 mass% or more and 75 mass% or less of a structural unit derived from a polystyrene macromonomer as a structural unit derived from a monomer (c), the polymer dispersant C having a weight average molecular weight of 50,000 or more and 65,000 or less;
   calcium carbonate as an inorganic filler; and
   dialkyl phthalate as a compound having no group dissociating a hydrogen ion.
<60> A slurry mixture containing:
   a polymer dispersant C containing 15 mass% or more and 30 mass% or less of a structural unit derived from 2-ethylhexyloxypolyethylene glycol methacrylate as a structural unit derived from a monomer (d), 7 mass% or more and 15 mass% or less of a structural unit derived from 2-hydroxyethyl methacrylate as a structural unit derived from a monomer (b), and 65 mass% or more and 75 mass% or less of a structural unit of a polyiso-butyl methacrylate macromonomer as a structural unit derived from a monomer (c), the polymer dispersant C having a weight average molecular weight of 50,000 or more and 65,000 or less;
   calcium carbonate as an inorganic filler; and
   dialkyl phthalate as a compound having no group dissociating a hydrogen ion.
<61> A slurry mixture containing:
   a polymer dispersant B containing 80 mass% or more and 88 mass% or less of a structural unit derived from lauroxypolyethylene glycol (meth)acrylate as a structural unit derived from a monomer (d) and 12 mass% or more and 20 mass% or less of a structural unit derived from 2-hydroxyethyl (meth)acrylate as a structural unit derived from a monomer (b);
   calcium carbonate as an inorganic filler; and
   trialkyl trimellitate as a compound having no group dissociating a hydrogen ion.
<62> A halogen-based resin composition containing:
   a polymer dispersant B containing 80 mass% or more and 88 mass% or less of a structural unit derived from lauroxypolyethylene glycol (meth)acrylate as a structural unit derived from a monomer (d), and 12 mass% or more and 20 mass% or less of a structural unit derived from glycerin mono(meth)acrylate as a structural unit derived from a monomer (b), the polymer dispersant B having a weight average molecular weight of 14,000 or more and 17,000 or less;
   calcium carbonate as an inorganic filler;
   dialkyl phthalate as a compound having no group dissociating a hydrogen ion; and
   a halogen-based resin.
<63> A halogen-based resin composition containing:
   a polymer dispersant C containing 15 mass% or more and 30 mass% or less of a structural unit derived from 2-ethylhexyloxypolyethylene glycol methacrylate as a structural unit derived from a monomer (d), 7 mass% or more and 15 mass% or less of a structural unit derived from 2-hydroxyethyl methacrylate as a structural unit derived from a monomer (b), and 65 mass% or more and 75 mass% or less of a structural unit derived from a polystyrene macromonomer as a structural unit derived from a monomer (c), the polymer dispersant C having a weight average molecular weight of 50,000 or more and 65,000 or less;
   calcium carbonate as an inorganic filler;
   dialkyl phthalate as a compound having no group dissociating a hydrogen ion; and
   a halogen-based resin.
<64> A method for producing an in-oil dispersion, the method including mixing the polymer dispersant described in any one of <1> to <29>, an inorganic filler, and a compound having no group dissociating a hydrogen ion.
<65> A method for producing a halogen-based resin composition, the method including mixing the polymer dispersant described in any one of <1> to <29>, an inorganic filler, a compound having no group dissociating a hydrogen ion, and a halogen-based resin.
<66> Use of a compound (I) as a dispersant, the compound (I) containing a structural unit derived from a monomer having a hydroxy group and a structural unit derived from a monomer represented by general formula (1) below: 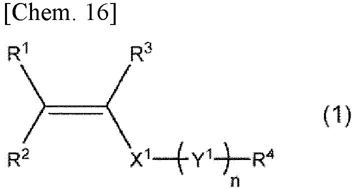 where
   R¹, R², and R³ are each selected from a hydrogen element or a methyl group;
   X¹ represents an oxygen element, an ester group, an amide group, or -CH₂O-;
   Y¹ represents a repeating unit of an alkylene glycol having from 2 to 4 carbons;
   R⁴ represents a hydrogen element or a hydrocarbon group having from 1 to 20 carbons; and n represents the number of repeating units of the alkylene glycol.
<67> The use as a dispersant according to <66> for dispersing an inorganic filler in a compound having no group dissociating a hydrogen ion.
<68> Use of the polymer dispersant described in any one of <1> to <29> for producing an in-oil dispersion.
<69> Use of the polymer dispersant described in any one of <1> to <29> for producing a halogen-based resin composition.

### Examples

In the following Examples and Comparative Examples, "parts" and "%" are "parts by mass" and "mass%", respectively, unless otherwise specified.

### Measurement

### Method for Measuring Weight Average Molecular Weight of Polymer Dispersant A

### (Compound A)

The weight average molecular weight of the polymer dispersant A was measured using a gel permeation chromatography (hereinafter also referred to as "GPC") method.

That is, the synthesized polymer dispersant was diluted with a mixture of tetrahydrofuran and methanol (volume ratio: 85/15) to prepare a solution having a solid content concentration of a sample of 0.01 mass% as a sample solution, and 2 µL of the sample solution was subjected to measurement. The measurement was performed by GPC [apparatus: "HLC-8320GPC" available from Tosoh Corporation, detector: differential refractometer (attached to the apparatus), column: "TSKgel Super HM-L" available from Tosoh Corporation, column temperature: 45°C, eluent flow rate: 0.5 mL/min] using a solution prepared by dissolving acetic acid in a tetrahydrofuran/methanol mixed solution (volumetric ratio: 85/15) so as to attain a concentration of 50 mmol/L as an eluent.

Polystyrene (available from Tosoh Corporation: molecular weight: from 5.26 × 10², 1.02 × 10⁵, and 8.42 × 10⁶; available from Nishio Industry Co., Ltd.: molecular weight: 4.0 × 10³, 3.0 × 10⁴, and 9.0 × 10⁵) was used as a standard material.

### Method for Measuring Weight Average Molecular Weight of Polymer Dispersant B

### (Compound B)

The weight average molecular weight of the polymer dispersant B was measured by the GPC method under the following conditions.

That is, the synthesized polymer dispersant B was diluted with N,N-dimethylformamide to prepare a solution having a solid content concentration of a sample of 0.3 mass% as a sample solution, and 100 µL of the sample solution was subjected to measurement. The measurement was performed by GPC [apparatus: "HLC-8320GPC" available from Tosoh Corporation, detector: differential refractometer (attached to the apparatus), column: "TSK-GEL α-M" × 2 available from Tosoh Corporation, column temperature: 40°C, eluent flow rate: 1 mL/min] using a solution prepared by dissolving phosphoric acid and lithium bromide in N,N-dimethylformamide so as to attain concentrations of 60 mmol/L and 50 mmol/L, respectively.

Polystyrene (available from Tosoh Corporation: molecular weight: from 5.26 × 10², 1.02 × 10⁵, and 8.42 × 10⁶; available from Nishio Industry Co., Ltd.: molecular weight: 4.0 × 10³, 3.0 × 10⁴, and 9.0 × 10⁵) was used as a standard material.

### Method for Measuring Slurry Viscosity

The slurry viscosity was measured using a rheometer (available from Anton Paar GmbH, trade name: MCR302). A 25 mm Φ parallel plate was used as a fixture, and shear rate sweep from 0.1 s⁻¹ to 10 s⁻¹ was performed at 25°C. As the slurry viscosity, a viscosity value at a shear rate 1 s⁻¹ was used.

### Measurement of Solid Content Concentration

In a 30 mL glass dish, 10.0 parts of sodium sulfate made to have a constant weight in a desiccator was weighed, and about 1.0 parts of a sample was added thereto. They were mixed, the mixture was accurately weighed, kept at 105°C for 2 hours to remove a volatile component, and further left in the desiccator for 15 minutes, and the mass was measured. The solid content concentration was obtained by dividing the mass of the sample after the removal of the volatile component as a solid content by the mass of the added sample.

### Production of Polymer Dispersant

### Example 1-1 (Production of Polymer Dispersant A-1)

4.5 g of stearyl methacrylate, 4.0 g of methoxypolyethylene glycol methacrylate (trade name: NK Ester TM-230G, added with 23 mol of EO on average, available from Shin-Nakamura Chemical Co., Ltd.), 1.5 g of glycerin monomethacrylate (trade name: Blemmer GLM, available from NOF CORPORATION), 0.085 g of 3-mercapto-1,2-propanediol (chain transfer agent: available from FUJIFILM Wako Pure Chemical Corporation), and 15.4 g of a toluene/ethanol mixed solution (mass ratio 50/50) were put into a 1 L four-necked separable flask to prepare an initial mixture, and two dropping funnels, a reflux condenser, a thermometer, and a stirrer were attached to the four-necked separable flask. The reaction system was purged with nitrogen, and then subjected to a temperature increase to 80°C with stirring, an initial additive, which was a mixed solution of 0.065 g of 2,2'-azobis(2,4-dimethylvaleronitrile) (polymerization initiator: trade name: V-65B, available from FUJIFILM Wako Pure Chemical Corporation) and 3.2 g of a toluene/ethanol mixed solution (mass ratio: 50/50), was added, and the resulting mixture was stirred for 10 minutes.

Then, while the temperature was maintained, a dropping mixture 1, which was a mixed solution of 40.5 g of stearyl methacrylate, 36.0 g of methoxypolyethylene glycol methacrylate (trade name: NK Ester TM-230G, added with 23 mol of EO on average, available from Shin-Nakamura Chemical Co., Ltd.), 13.5 g of glycerin monomethacrylate (trade name: Blemmer GLM, available from NOF Corporation), 0.765 g of 3-mercapto-1,2-propanediol (chain transfer agent: available from FUJIFILM Wako Pure Chemical Corporation), and 19.3 g of a toluene/ethanol mixed solution (mass ratio: 50/50), and a dropping mixture 2, which was a mixed solution of 0.590 g of the polymerization initiator and 28.7 g of a toluene/ethanol mixed solution (mass ratio: 50/50), were separately added dropwise over 120 minutes. After completion of the dropwise addition, the mixture was stirred at 80°C for 30 minutes, and an additive 1, which was a mixed solution of 0.100 g of the polymerization initiator and 4.8 g of a toluene/ethanol mixed solution (mass ratio 50/50), was added thereto. Further, the mixture was stirred at 80°C for 60 minutes, and an additive 2 which was a mixed solution of 0.100 g of the polymerization initiator and 4.8 g of a toluene/ethanol mixed solution (mass ratio 50/50) was added thereto. The mixture was then stirred at 80°C for 30 minutes and then cooled to room temperature. The resulting polymer solution was dried under reduced pressure at 100°C for 5 hours, resulting in the formation of a polymer dispersant A-1.

The weight average molecular weight of the resulting polymer dispersant A-1 was measured by the above method, and, as a result, the weight average molecular weight of the dispersant A-1 was 27,800.

### Example 1-2 (Production of Polymer Dispersant A-2)

A polymer dispersant A-2 was prepared in the same manner as in Example 1-1 except that the blending amount of each component was changed to the amount shown in Table 1.

The weight average molecular weight of the resulting polymer dispersant A-2 was measured by the above method, and, as a result, the weight average molecular weight of the dispersant A-2 was 25,700.

### Example 1-3 (Production of Dispersant B-1)

1.5 g of glycerin monomethacrylate (trade name: Blemmer GLM, available from NOF CORPORATION), 8.5 g of lauroxypolyethylene glycol methacrylate (trade name: Blemmer PLE200, added with 4 mol of EO on average, available from NOF CORPORATION), 0.094 g of 3-mercapto-1,2-propanediol (chain transfer agent: available from FUJIFILM Wako Pure Chemical Corporation), and 15.1 g of a toluene/ethanol mixed solution (mass ratio 50/50) were put into a 1 L four-necked separable flask to prepare an initial mixture, and two dropping funnels, a reflux condenser, a thermometer, and a stirrer were attached to the four-necked separable flask. The reaction system was purged with nitrogen, and then subjected to a temperature increase to 80°C with stirring, an initial additive, which was a mixed solution of 0.072 g of 2,2'-azobis(2,4-dimethylvaleronitrile) (polymerization initiator: trade name: V-65B, available from FUJIFILM Wako Pure Chemical Corporation) and 3.5 g of a toluene/ethanol mixed solution (mass ratio: 50/50), was added, and the resulting mixture was stirred for 10 minutes.

Then, while the temperature was maintained, a dropping mixture 1, which was a mixed solution of 13.5 g of glycerin monomethacrylate (trade name: Blemmer GLM, available from NOF CORPORATION), 76.5 g of lauroxypolyethylene glycol methacrylate (trade name: Blemmer PLE200, added with 4 mol of EO on average, available from NOF CORPORATION), 0.846 g of 3-mercapto-1,2-propanediol (chain transfer agent: available from FUJIFILM Wako Pure Chemical Corporation), and 16.1 g of a toluene/ethanol mixed solution (mass ratio: 50/50), and a dropping mixture 2, which was a mixed solution of 0.648 g of the polymerization initiator and 31.9 g of a toluene/ethanol mixed solution (mass ratio: 50/50), were separately added dropwise over 120 minutes. After completion of the dropwise addition, the mixture was stirred at 80°C for 30 minutes, and an additive 1, which was a mixed solution of 0.110 g of the polymerization initiator and 5.3 g of a toluene/ethanol mixed solution (mass ratio 50/50), was added thereto. Further, the mixture was stirred at 80°C for 60 minutes, and an additive 2, which was a mixed solution of 0.110 g of the polymerization initiator and 5.3 g of a toluene/ethanol mixed solution (mass ratio 50/50), was added thereto. The mixture was then stirred at 80°C for 30 minutes and then cooled to room temperature. The resulting polymer solution was dried under reduced pressure at 100°C for 5 hours, resulting in the formation of a dispersant B-1.

As a result of measuring the weight average molecular weight of the obtained dispersant B-1 by the above-described method, the weight average molecular weight of the dispersant B-1 was 15,600.

### Examples 1-4 to 1-12 (Production of Polymer Dispersants B-2 to B-10)

Polymer dispersants B-2 to B-10 were prepared in the same manner as in Example 1-3 except that each component and the blending amount thereof were changed as shown in Table 1.
The weight average molecular weights of the obtained polymer dispersants B-2 to B-10 were measured by the method described above. The results are shown in Table 2.

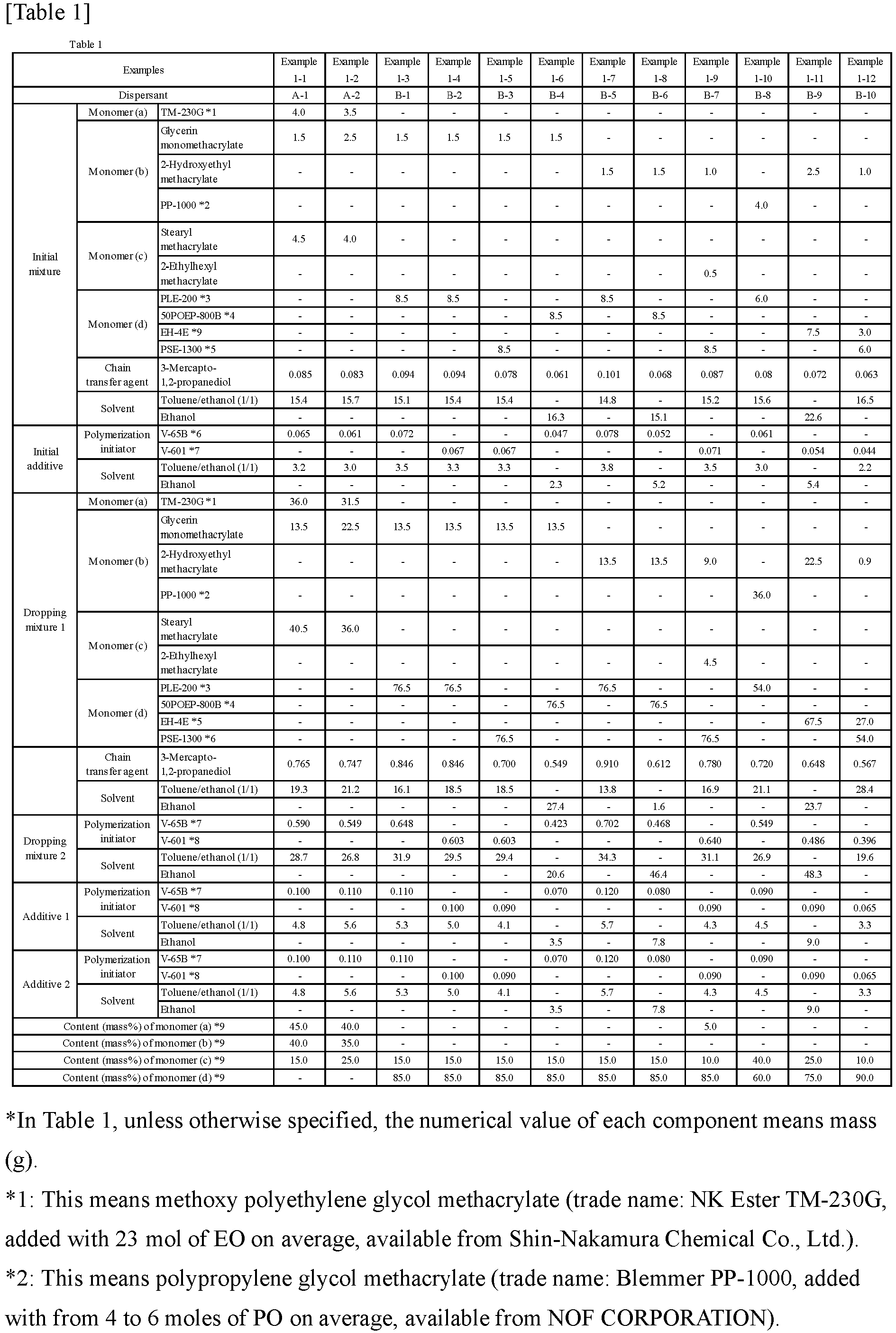

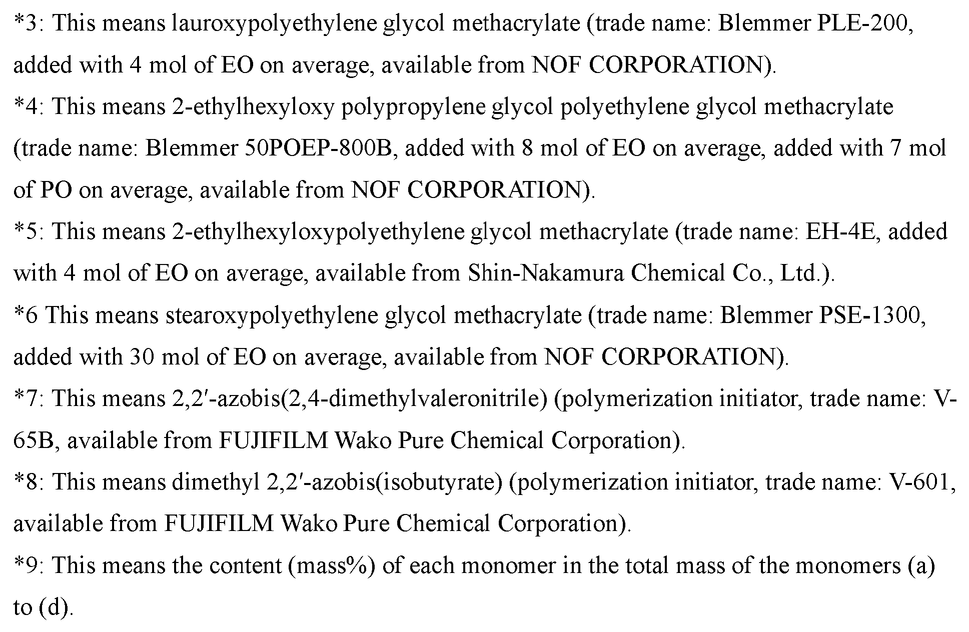

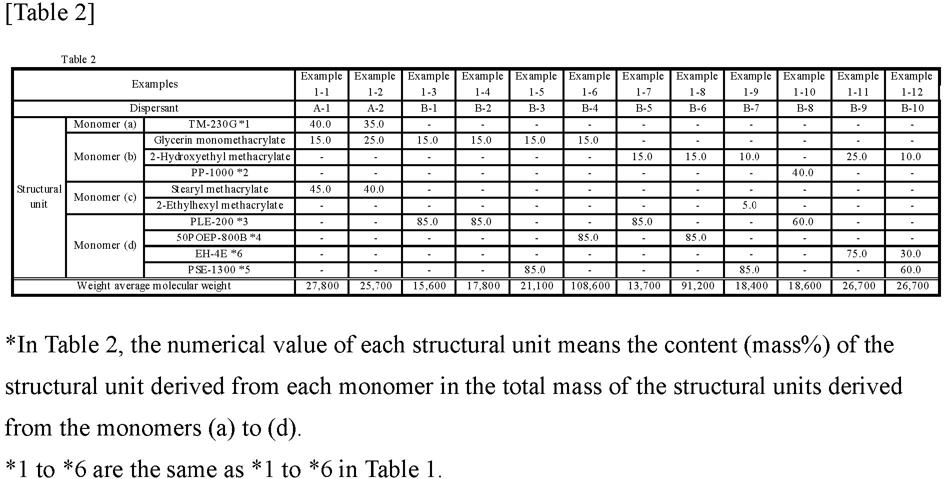

### Example 1-13 (Production of Polymer Dispersant C-1)

0.8 g of 2-hydroxyethyl methacrylate (available from FUJIFILM Wako Pure Chemical Corporation), 7.0 g of a polystyrene macromonomer (trade name: AS-6, available from Toagosei Co., Ltd.), 2.2 g of 2-ethylhexyloxypolyethylene glycol methacrylate (trade name EH-4E, added with 4 mol of EO on average, available from Shin-Nakamura Chemical Co., Ltd.), 0.043 g of 3-mercapto-1,2-propanediol (chain transfer agent: available from FUJIFILM Wako Pure Chemical Corporation), and 20.1 g of toluene were put into a 1 L four-necked separable flask to prepare an initial mixture, and two dropping funnels, a reflux condenser, a thermometer, and a stirrer were attached to the four-necked separable flask. The reaction system was purged with nitrogen, and then subjected to a temperature increase to 80°C with stirring, an initial additive, which was a mixed solution of 0.046 g of dimethyl 2,2'-azobis(isobutyrate) (polymerization initiator: trade name: V-601, available from FUJIFILM Wako Pure Chemical Corporation) and 4.5 g of toluene, was added, and the resulting mixture was stirred for 10 minutes.

Then, while the temperature was maintained, a dropping mixture 1, which was a mixed solution of 7.2 g of 2-hydroxyethyl methacrylate (available from FUJIFILM Wako Pure Chemical Corporation), 63.0 g of a polystyrene macromonomer (trade name: AS-6, available from Toagosei Co., Ltd.), 19.8 g of 2-ethylhexyloxypolyethylene glycol methacrylate (trade name EH-4E, added with 4 mol of EO on average, available from Shin-Nakamura Chemical Co., Ltd.), 0.387 g of 3-mercapto-1,2-propanediol (chain transfer agent: available from FUJIFILM Wako Pure Chemical Corporation), and 63.0 g of toluene, and a dropping mixture 2, which was a mixed solution of 0.414 g of the polymerization initiator and 40.6 g of toluene, were separately added dropwise over 120 minutes. After completion of the dropwise addition, the mixture was stirred at 80°C for 30 minutes, and an additive 1, which was a mixed solution of 0.06 g of the polymerization initiator and 6.0 g of toluene, was added thereto. Further, the mixture was stirred at 80°C for 60 minutes, and an additive 2, which was a mixed solution of 0.06 g of the polymerization initiator and 6.0 g of toluene, was added thereto. The mixture was then stirred at 80°C for 30 minutes and then cooled to room temperature. The resulting polymer solution was dried under reduced pressure at 100°C for 5 hours, resulting in the formation of a dispersant C-1.

The weight average molecular weight of the resulting dispersant C-1 was measured by the same method as that for the polymer dispersant B (compound B), and, as a result, the weight average molecular weight of the dispersant C-1 was 51,900.

### Example 1-14 (Production of Polymer Dispersant C-2)

### Production of Polyiso-butyl Methacrylate Macromonomer Solution

20.0 g of iso-butyl methacrylate (available from FUJIFILM Wako Pure Chemical Corporation), 0.425 g of 3-mercaptopropionic acid (chain transfer agent: available from FUJIFILM Wako Pure Chemical Corporation), and 49.5 g of propylene glycol methyl ether acetate (available from FUJIFILM Wako Pure Chemical Corporation) were put into a 1 L four-necked separable flask to prepare an initial mixture, and two dropping funnels, a reflux condenser, a thermometer, and a stirrer were attached to the four-necked separable flask. The reaction system was purged with nitrogen, and then subjected to a temperature increase to 94°C with stirring, an initial additive, which was a mixed solution of 0.167 g of dimethyl 2,2'-azobis(isobutyrate) (polymerization initiator: trade name: V-601, available from FUJIFILM Wako Pure Chemical Corporation) and 6.5 g of propylene glycol methyl ether acetate, was added, and the resulting mixture was stirred for 10 minutes.

Then, while the temperature was maintained, a dropping mixture 1, which was a mixed solution of 180 g of iso-butyl methacrylate (available from FUJIFILM Wako Pure Chemical Corporation), 3.825 g of 3-mercaptopropionic acid (chain transfer agent: available from FUJIFILM Wako Pure Chemical Corporation), and 85.6 g of propylene glycol methyl ether acetate (available from FUJIFILM Wako Pure Chemical Corporation), and a dropping mixture 2, which was a mixed solution of 1.503 g of the polymerization initiator and 58.4 g of propylene glycol methyl ether acetate, were separately added dropwise over 120 minutes.

After completion of the dropwise addition, the dropping funnel was removed, an air blowing capillary was installed, and bubbling of air was started with a pump. While the temperature was maintained in the system at from 92 to 93°C and the bubbling was continued, 0.20 g of paramethoxyphenol (polymerization inhibitor: available from FUJIFILM Wako Pure Chemical Corporation) and 3.87 g of tetrabutylammonium bromide (available from FUJIFILM Wako Pure Chemical Corporation) were added. Next, 6.83 g of glycidyl methacrylate (available from FUJIFILM Wako Pure Chemical Corporation) was added, and the mixture was held for 9 hours. Thereafter, the mixture was cooled to room temperature, resulting in the formation of a polyiso-butyl methacrylate macromonomer solution. The resulting polyiso-butyl methacrylate macromonomer solution had an effective content of 46.5 mass%, and the weight average molecular weight of the polyiso-butyl methacrylate macromonomer was measured by the same method as that for the polymer dispersant B (compound B) and found to be 8,690.

### Production of Polymer Dispersant C-2

0.4 g of 2-hydroxyethyl methacrylate (available from FUJIFILM Wako Pure Chemical Corporation), 7.5 g of the polyiso-butyl methacrylate macromonomer solution produced above, 1.1 g of 2-ethylhexyloxypolyethylene glycol methacrylate (trade name EH-4E, added with 4 mol of EO on average, available from Shin-Nakamura Chemical Co., Ltd.), 0.021 g of 3-mercapto-1,2-propanediol (chain transfer agent: available from FUJIFILM Wako Pure Chemical Corporation), and 5.2 g of ethanol were put into a 1 L four-necked separable flask to prepare an initial mixture, and two dropping funnels, a reflux condenser, a thermometer, and a stirrer were attached to the four-necked separable flask. The reaction system was purged with nitrogen, and then subjected to a temperature increase to 80°C with stirring, an initial additive, which was a mixed solution of 0.015 g of dimethyl 2,2'-azobis(isobutyrate) (polymerization initiator: trade name: V-601, available from FUJIFILM Wako Pure Chemical Corporation) and 4.3 g of ethanol, was added, and the resulting mixture was stirred for 10 minutes.

Then, while the temperature was maintained, a dropping mixture 1, which was a mixed solution of 3.6 g of 2-hydroxyethyl methacrylate (available from FUJIFILM Wako Pure Chemical Corporation), 67.7 g of the polyiso-butyl methacrylate macromonomer solution produced above, 9.9 g of 2-ethylhexyloxypolyethylene glycol methacrylate (trade name EH-4E, added with 4 mol of EO on average, available from Shin-Nakamura Chemical Co., Ltd.), 0.19 g of 3-mercapto-1,2-propanediol (chain transfer agent: available from FUJIFILM Wako Pure Chemical Corporation), and 1.6 g of ethanol, and a dropping mixture 2, which was a mixed solution of 0.14 g of the polymerization initiator and 38.9 g of ethanol, were separately added dropwise over 120 minutes. After completion of the dropwise addition, the mixture was stirred at 80°C for 30 minutes, and an additive 1, which was a mixed solution of 0.03 g of the polymerization initiator and 8.2 g of ethanol, was added thereto. Further, the mixture was stirred at 80°C for 60 minutes, and an additive 2, which was a mixed solution of 0.03 g of the polymerization initiator and 8.2 g of ethanol, was added thereto. The mixture was then stirred at 80°C for 30 minutes and then cooled to room temperature. The resulting polymer solution was dried under reduced pressure at 120°C for 5 hours, resulting in the formation of a dispersant C-2.

The weight average molecular weight of the resultant dispersant C-2 was measured by the same method as that for the polymer dispersant B (compound B), and, as a result, the weight average molecular weight of the dispersant C-2 was 61,800.

### [Table 3]

**Table 3**

| Examples | | | Example 1-13 | Example 1-14 |
|---|---|---|---|---|
| Dispersant | | | C-1 | C-2 |
| Initial mixture | Monomer (b) | 2-Hydroxyethyl methacrylate | 0.8 | 0.4 |
| | Macromonomer *10 | Polystyrene macromonomer | 7.0 | - |
| | | Polyiso-butyl methacrylate macromonomer solution | - | 7.5 |
| | Monomer (d) | EH-4E *5 | 2.2 | 1.1 |
| | Chain transfer agent | 3-Mercapto-1,2-propanediol | 0.043 | 0.021 |
| | Solvent | Toluene | 20.1 | - |
| | | Ethanol | - | 5.2 |
| Initial additive | Polymerization initiator | V-601 *8 | 0.046 | 0.015 |
| | Solvent | Toluene | 4.5 | - |
| | | Ethanol | - | 4.3 |
| Dropping mixture 1 | Monomer (b) | 2-Hydroxyethyl methacrylate | 7.2 | 3.6 |
| | Macromonomer *10 | Polystyrene macromonomer | 63.0 | - |
| | | Polyiso-butyl methacrylate macromonomer solution | - | 67.7 |
| | Monomer (d) | EH-4E *5 | 19.8 | 9.9 |
| | Chain transfer agent | 3-Mercapto-1,2-propanediol | 0.387 | 0.19 |
| | Solvent | Toluene | 63.0 | - |
| | | Ethanol | - | 1.6 |
| Dropping mixture 2 | Polymerization initiator | V-601 *8 | 0.414 | 0.14 |
| | Solvent | Toluene | 40.6 | - |
| | | Ethanol | - | 38.9 |
| Additive 1 | Polymerization initiator | V-601 *8 | 0.06 | 0.03 |
| | Solvent | Toluene | 6.0 | - |
| | | Ethanol | - | 8.2 |
| Additive 2 | Polymerization initiator | V-601 *8 | 0.06 | 0.03 |
| | Solvent | Toluene | 6.0 | - |
| | | Ethanol | - | 8.2 |
| Content (mass%) of monomer (b) *9 | | | 8.0 | 8.0 |
| Content (mass%) of macromonomer *9 and *10 | | | 70.0 | 70.0 |
| Content (mass%) of monomer (d) *9 | | | 22.0 | 22.0 |

| | | | | |
|---|---|---|---|---|
| *5, *8 and *9 are the same as *5, *8 and *9 in Table 1. *10: This means a macromonomer composed of a structural unit derived from the monomer (c). | | | | |

### Comparative Example 1-1 (Production of Polymer Dispersant D-1)

450.0 g of toluene, 224.0 g of diisobutylene (available from FUJIFILM Wako Pure Chemical Corporation), 198.0 g of maleic anhydride (available from FUJIFILM Wako Pure Chemical Corporation), and 13.3 g of benzoyl peroxide (polymerization initiator: available from Tokyo Chemical Industry Co., Ltd.) were put into a 1 L four-necked separable flask, and a reflux condenser, a thermometer, and a stirrer were attached to the four-necked separable flask. The reaction system was purged with nitrogen, and then subjected to a temperature increase to 83°C with stirring, and the reaction was carried out for 240 minutes while the temperature was maintained. Then, the reaction product was transferred to a vat coated with Teflon (registered trademark) and dried under reduced pressure at 100°C for 5 hours. The weight average molecular weight of the resulting polymer was measured using the method for measuring the weight average molecular weight of the polymer dispersant B, and found to be 28,600.

136.0 g of methyl isobutyl ketone and 24.8 g of the polymer prepared above (containing 0.12 mol of a constituent component derived from maleic anhydride) were put into a 1 L four-necked separable flask, and the reaction system was purged with nitrogen, and then dissolved at room temperature for 2 hours with stirring. Next, the reaction system was subjected to a temperature increase to 72°C while stirring, and 32.0 g (0.12 mol) of oleylamine (available from Tokyo Chemical Industry Co., Ltd.) melted in advance at 80°C was added. The mixture was stirred at 72°C for 120 minutes to perform amidation, and then cooled to room temperature. The solid content concentration of the resulting polymer solution was 30.1%. The obtained polymer solution (10.0 g) was weighed on a glass petri dish and dried under reduced pressure at 100°C for 5 hours, resulting in the formation of a polymer dispersant D-1.

Since the resulting polymer dispersant D-1 was insoluble in the eluent of GPC, the weight average molecular weight was calculated using the above-described GPC measurement values and found to be 65,500.

### Measurement (1) of Slurry Viscosity of In-oil Dispersion

### Example 2-1

In a 500 mL plastic cup, 0.4 g (0.5% as a concentration relative to the mass of aluminum oxide) of the polymer dispersant A-1, 40 g of cyclohexanone, and 85 g of aluminum oxide (trade name: Alumina AES-12, median particle diameter: 0.44 µm, available from Sumitomo Chemical Co., Ltd.) were put in this order, and were uniformly mixed with a spatula. Thereafter, the mixture was mixed with a laboratory mixer at a rotation speed of 1,500 rpm for 1 minute, resulting in the formation of an in-oil dispersion containing the polymer dispersant A-1, cyclohexanone and aluminum oxide. The slurry viscosity of this mixture at 25°C was 16.8 Pa·s.

### Example 2-2 and Comparative Examples 2-1 and 2-2

In-oil dispersions were prepared in the same manner as in Example 2-1 except that the type of the polymer dispersant was changed as shown in Table 4, and the slurry viscosity of each in-oil dispersion at 25°C was measured. The results are shown in Table 4.

### Comparative Example 2-3

An in-oil dispersion was prepared in the same manner as in Example 2-1 except that the polymer dispersant A-1 was not used, and the slurry viscosity of the in-oil dispersion at 25°C was measured. The results are shown in Table 4.

### [Table 4]

**Table 5**

| | Dispersant or the like | Concentration (mass%) *1 | Slurry viscosity (Pa·s) *2 |
|---|---|---|---|
| Example 3-1 | B-1 | 0.5 | 24.1 |
| Example 3-2 | B-2 | 0.5 | 28.4 |
| Example 3-3 | B-3 | 0.5 | 45.3 |
| Example 3-4 | B-7 | 0.5 | 5.8 |
| Example 3-5 | C-1 | 0.5 | 61.8 |
| Example 3-6 | C-2 | 0.5 | 4.7 |
| Comparative Example 3-1 | Glycerin monostearyl *3 | 0.5 | 129 |
| Comparative Example 3-2 | D-1 | 0.5 | 155 |
| Comparative Example 3-3 | - | - | 5,640 |

| | | | |
|---|---|---|---|
| *1: This means a concentration of the dispersant or the like relative to the mass of aluminum oxide. *2: Shear rate 1 S⁻¹ *3: Trade name: EXCEL S-95, available from Kao Corporation | | | |

### Measurement (2) of Slurry Viscosity of In-oil Dispersion

### Example 3-1

In a 500 mL plastic cup, 0.4 g (0.5% as a concentration relative to the mass of aluminum oxide) of the polymer dispersant B-1, 40 g of propylene glycol methyl ether acetate (available from FUJIFILM Wako Pure Chemical Corporation), and 85 g of aluminum oxide (trade name: Alumina AES-12, median particle diameter: 0.44 µm, available from Sumitomo Chemical Co., Ltd.) were put in this order, and were uniformly mixed with a spatula. Thereafter, the mixture was mixed with a laboratory mixer at a rotation speed of 1,500 rpm for 1 minute, resulting in the formation of an in-oil dispersion containing the polymer dispersant B-1, propylene glycol methyl ether acetate and aluminum oxide. The slurry viscosity of this mixture at 25°C was 24.1 Pa·s.

### Examples 3-2 to 3-6 and Comparative Examples 3-1 and 3-2

In-oil dispersions were prepared in the same manner as in Example 3-1 except that the type of the polymer dispersant was changed as shown in Table 5, and the slurry viscosity of each in-oil dispersion at 25°C was measured. The results are shown in Table 5.

### Comparative Example 3-3

An in-oil dispersion was prepared in the same manner as in Example 3-1 except that the polymer dispersant B-1 was not used, and the slurry viscosity of the in-oil dispersion at 25°C was measured. The results are shown in Table 5.

### [Table 5]

**Table 5**

| | Dispersant or the like | Concentration (mass %) *1 | Slurry viscosity (Pa·s) *2 |
|---|---|---|---|
| Example 3-1 | B-1 | 0.5 | 24.1 |
| Example 3-2 | B-2 | 0.5 | 28.4 |
| Example 3-3 | B-3 | 0.5 | 45.3 |
| Example 3-4 | B-7 | 0.5 | 5.8 |
| Example 3-5 | C-1 | 0.5 | 61.8 |
| Example 3-6 | C-2 | 0.5 | 4.7 |
| Comparative Example 3-1 | Glycerin monostearyl *3 | 0.5 | 129 |
| Comparative Example 3-2 | D-1 | 0.5 | 155 |
| Comparative Example 3-3 | - | - | 5,640 |

| | | | |
|---|---|---|---|
| *1: This means a concentration of the dispers art or the like relative to the mass of aluminum oxide. *2: Shear rate 1 S⁻¹ *3: Trade name: EXCEL S-95, available from Kao Corporation | | | |

As shown in Table 4, the slurry viscosity of the in-oil dispersion containing the polymer dispersant A of the present invention, aluminum oxide as the inorganic filler, and cyclohexanone as the compound having no group dissociating a hydrogen ion was sufficiently lower than the slurry viscosity of the in-oil dispersion containing glycerin monostearyl as a dispersant instead of the polymer dispersant A, the slurry viscosity of the in-oil dispersion containing the polymer dispersant D-1 as a dispersant instead of the polymer dispersant A, and the slurry viscosity of the in-oil dispersion containing aluminum oxide and cyclohexanone without using a dispersant.

Similarly, as shown in Table 5, the slurry viscosity of the in-oil dispersion containing the polymer dispersant B or C of the present invention, aluminum oxide as the inorganic filler, and propylene glycol methyl ether acetate as the compound having no group dissociating a hydrogen ion was sufficiently lower than the slurry viscosity of the in-oil dispersion containing glycerin monostearyl as a dispersant instead of the polymer dispersant B or C, the slurry viscosity of the in-oil dispersion containing the polymer dispersant D-1 as a dispersant instead of the polymer dispersant B or C, and the slurry viscosity of the in-oil dispersion containing aluminum oxide and propylene glycol methyl ether acetate without using a dispersant.

Further, from the results of Tables 4 and 5, it is considered that the polymer dispersant of the present invention can reduce the slurry viscosity of the in-oil dispersion and can improve the applicability and moldability thereof even when a non-aromatic organic solvent having high polarity is used instead of an aromatic solvent typically used for an in-oil dispersion.

Furthermore, from the results of Comparative Examples 2-2 and 3-2, it is considered that the polymer dispersant D-1 had a high solubility in a solvent and thus had an insufficient effect as a dispersant, and could not reduce the slurry viscosity of the in-oil dispersion.

### Measurement of Slurry Viscosity of Halogen-based Resin Composition

### Example 4-1

Mixed were 0.1 g (0.5% as a concentration relative to the mass of calcium carbonate) of the polymer dispersant B-1, 60 g of bis(2-ethylhexyl) phthalate, 20 g of calcium carbonate (trade name: Whiton H, available from Shiraishi Calcium Co., Ltd.), 100 g of a vinyl chloride resin (average polymerization degree: 1400, trade name: ZEST1400, available from Shin Dai-Ichi Vinyl Corporation), 2 g of a Ca/Mg/Zn-based vinyl chloride resin stabilizer (trade name: Adekastab RUP-103, available from ADEKA CORPORATION), and 0.5 g of a lubricant (trade name: Lunac S-70V, available from Kao Corporation), at room temperature using a stirring rod. Thereafter, the mixture was mixed with a laboratory mixer at a rotation speed of 5,000 rpm for 3 minutes. Then, the mixture was allowed to stand at room temperature under reduced pressure for 10 minutes and defoamed, resulting in the formation of a halogen-based resin composition. The slurry viscosity of the halogen-based resin composition at 25°C was 13 Pa·s.

### Example 4-2

A halogen-based resin composition was prepared in the same manner as in Example 4-1 except that the type of the polymer dispersant was changed as shown in Table 6, and the slurry viscosity of the halogen-based resin composition at 25°C was measured. The results are shown in Table 6.

### Comparative Example 4-1

A halogen-based resin composition was prepared in the same manner as in Example 4-1 except that the polymer dispersant B-1 was not used, and the slurry viscosity of the halogen-based resin composition at 25°C was measured. The results are shown in Table 6.

### [Table 6]

**Table 6**

| | | Polymer dispersant or the like | | Evaluation results |
|---|---|---|---|---|
| | | Type | Concentration (mass%) *1 | Slurry viscosity (Pa·s) |
| Examples | 4-1 | B-1 | 0.5 | 13 |
| | 4-2 | B-5 | 0.5 | 14 |
| ComparativeExample | 4-1 | - | - | 36 |

| | | | | |
|---|---|---|---|---|
| *1 This means a concentration of the polymer dispersant or the like relative to the mass of calcium carbonate. | | | | |

As shown in Table 6, from the results of Examples and Comparative Examples, it was found that the use of the polymer dispersant of the present invention reduces the slurry viscosity of the halogen-based resin composition and improves the processability of the halogen-based resin composition.

### Measurement (1) of Slurry Viscosity of Mixture

### Example 5-1

In a 500 mL plastic cup, 0.4 g (0.5% as a concentration relative to the mass of calcium carbonate) of the polymer dispersant A-1, 40 g of bis(2-ethylhexyl) phthalate (available from FUJIFILM Wako Pure Chemical Corporation), and 85 g of calcium carbonate (trade name: Whiton H, available from Shiraishi Calcium Co., Ltd.) were put in this order, and were uniformly mixed with a spatula. Thereafter, the mixture was mixed with a laboratory mixer at a rotation speed of 5,000 rpm for 3 minutes. Then, the mixture was allowed to stand at room temperature under reduced pressure for 10 minutes and defoamed, resulting in the formation of a mixture of the polymer dispersant A-1, bis(2-ethylhexyl) phthalate and calcium carbonate. The slurry viscosity of this mixture at 25°C was 4.4 Pa·s.

### Examples 5-2 to 5-10 and Comparative Examples 5-1 to 5-3

Mixtures were prepared in the same manner as in Example 5-1 except that the type of the polymer dispersant was changed as shown in Table 7, and the slurry viscosity of each mixture at 25°C was measured. The results are shown in Table 7.

### Comparative Example 5-4

A mixture was prepared in the same manner as in Example 5-1 except that the polymer dispersant A-1 was not used, and the slurry viscosity of the mixture at 25°C was measured. The results are shown in Table 7.

### [Table 7]

**Table 7**

| | Dispersant or the like | Concentration (mass%) *1 | Slurry viscosity (Pa·s) *2 |
|---|---|---|---|
| Example 5-1 | A-1 | 0.5 | 4.4 |
| Example 5-2 | B-1 | 0.5 | 0.8 |
| Example 5-3 | B-4 | 0.5 | 0.9 |
| Example 5-4 | B-5 | 0.5 | 0.9 |
| Example 5-5 | B-6 | 0.5 | 0.9 |
| Example 5-6 | B-8 | 0.5 | 1.3 |
| Example 5-7 | B-9 | 0.5 | 1.1 |
| Example 5-8 | B-10 | 0.5 | 1.0 |
| Example 5-9 | C-1 | 0.5 | 2.2 |
| Example 5-10 | C-2 | 0.5 | 1.1 |
| Comparative Example 5-1 | Glycerin monostearyl *3 | 0.5 | 88.0 |
| Comparative Example 5-2 | | 1.0 | 40.0 |
| Comparative Example 5-3 | | 2.5 | 32.0 |
| Comparative Example 5-4 | - | - | 104.0 |

| | | | |
|---|---|---|---|
| *1 This means a concentration of the dispers ant or the like relative to the mass of calcium carbonate. *2: Shear rate 1 S⁻¹ *3: Trade name: EXCEL S-95, available from Kao Corporation | | | |

From the results of Examples 4-1 and 4-2 and Examples 5-2 and 5-4, it was found that, when the slurry viscosity of the mixture of the polymer dispersant of the present invention, the inorganic filler, and the compound having no group dissociating a hydrogen ion is sufficiently low, the slurry viscosity of the halogen-based resin composition containing the polymer dispersant of the present invention, the inorganic filler, the compound having no group dissociating a hydrogen ion, and the halogen-based resin can be reduced, and that the processability is improved. Therefore, from the results of Examples 5-1 to 5-10, it is considered that, since the slurry viscosity of the mixture of the polymer dispersant of the present invention, the inorganic filler, and the compound having no group dissociating a hydrogen ion is sufficiently low, the slurry viscosity of the halogen-based resin composition containing the polymer dispersant of the present invention, the inorganic filler, the compound having no group dissociating a hydrogen ion, and the halogen-based resin is low and that the processability is improved.

On the other hand, as indicated in Comparative Examples 5-1 to 5-3, the surfactant such as glycerin monostearyl decreased the slurry viscosity of the mixture of the surfactant, the inorganic filler, and the compound having no group dissociating a hydrogen ion to some extent, but did not sufficiently decrease the slurry viscosity.

### Measurement (2) of Slurry Viscosity of Mixture

### Examples 6-1 to 6-2

A mixture was prepared in the same manner as in Example 5-1 except that the type of the dispersant was changed as shown in Table 8 and that bis(2-ethylhexyl) phthalate was changed to trimellitate (tris(2-ethylhexyl) trimellitate, available from Tokyo Chemical Industry Co., Ltd.), and the slurry viscosity of the mixture at 25°C was measured. The results are shown in Table 8.

### Comparative Example 6-1

A mixture was prepared in the same manner as in Comparative Example 5-4 except that bis(2-ethylhexyl) phthalate was changed to the trimellitate, and the slurry viscosity of the mixture at 25°C was measured. The results are shown in Table 8.

### [Table 8]

**Table 8**

| | Dispersant or the like | Concentration (mass%) *1 | Slurry viscosity (Pa·s) *2 |
|---|---|---|---|
| Example 6-1 | B-4 | 0.5 | 23.5 |
| Example 6-2 | B-5 | 0.5 | 4.2 |
| Comparative Example 6-1 | - | - | 359.8 |

| | | | |
|---|---|---|---|
| *1 This means a concentration of the dispersant or the like relative to the mass of calcium carbonate. *2: Shear rate 1 S⁻¹ | | | |

From the results of Examples 6-1 and 6-2 and Comparative Example 6-1, it is considered that, even when trimellitate is used as the compound having no group dissociating a hydrogen ion, the slurry viscosity of the mixture of the polymer dispersant of the present invention, the compound having no group dissociating a hydrogen ion and the inorganic filler can be reduced, and that the processability of the halogen-based resin composition containing them is improved.

The reason why the slurry viscosities of the mixtures of Examples 6-1 and 6-2 are higher than the slurry viscosities of the mixtures of Examples 5-3 and 5-4 is considered to be that the viscosity of trimellitate is higher than the viscosity of bis(2-ethylhexyl) phthalate.

### Low-Temperature Bending Resistance Test of Halogen-based Resin Composition

### Example 7-1

### Production of Halogen-based Resin Composition

Mixed were 0.1 g (0.5% as a concentration relative to the mass of calcium carbonate) of the polymer dispersant B-1, 60 g of dialkyl phthalate (C₁₀ to C₁₂) (trade name: VINYCIZER 124N, available from Kao Corporation), 20 g of calcium carbonate (trade name: Whiton H, available from Shiraishi Calcium Co., Ltd.), 100 g of a vinyl chloride resin (average polymerization degree: 1400, trade name: ZEST1400, available from Shin Dai-Ichi Vinyl Corporation), 2 g of a Ca/Mg/Zn-based vinyl chloride resin stabilizer (trade name: Adekastab RUP-103, available from ADEKA CORPORATION), and 0.5 g of a lubricant (trade name: Lunac S-70V, available from Kao Corporation, ) at room temperature using a stirring rod. Thereafter, using a 4-inch open roll type kneader (available from Nishimura Machinery K.K.), the mixture was mixed and gelled at a rotation speed of 17.5 rpm and 160°C, and after gelation, the mixing was continued for 10 minutes, resulting in the formation of a halogen-based resin composition.

### Production of Molded Sheet

The halogen-based resin composition prepared above was preheated at 170°C for 5 minutes and then pressurized at 20 MPa for 2 minutes, resulting in the formation of a resin-molded sheet having a thickness of 0.8 mm.

### Evaluation of Low-Temperature Bending Resistance

Six test pieces prepared by punching each of the molded sheets of the halogen-based resin compositions prepared above into 6 mm × 64 mm were used to perform a low-temperature bending resistance test using a De Mattia bending tester (trade name: FT-1506, available from Ueshima Seisakusho Co., Ltd.). The test was performed under the conditions of a test temperature of -25°C, a bending speed of 300 times/min, a distance between the grips of 30 mm, and a bending stroke of 25 mm. The apparatus was stopped every 1000 times, the presence or absence of breakage was confirmed, and the number of times of bending to break of the six test pieces was measured. Table 9 shows an average value of four values excluding the maximum and minimum values of the number of times of bending to break. The larger this value is, the more excellent the low-temperature bending resistance is.

### Examples 7-2 to 7-5

Molded sheets of halogen-based resin compositions were produced in the same manner as in Example 7-1 except that the polymer dispersant B-1 was changed to the dispersants B-5, B-9, B-10, and C-1, and the low-temperature bending resistance was evaluated. The results are shown in Table 9.

### Comparative Example 7-1

A molded sheet of a halogen-based resin composition was produced in the same manner as in Example 7-1 except that the polymer dispersant B-1 was not used, and the low-temperature bending resistance was evaluated. The results are shown in Table 9.

### [Table 9]

**Table 9**

| | | Polymer dispersant | | Evaluation results |
|---|---|---|---|---|
| | | Type | Concentration (mass%) *1 | Number of times of bending to break (times) |
| Examples | 7-1 | B-1 | 0.5 | 19,350 |
| | 7-2 | B-5 | 0.5 | 15,050 |
| | 7-3 | B-9 | 0.5 | 12,500 |
| | 7-4 | B-10 | 0.5 | 14,000 |
| | 7-5 | C-1 | 0.5 | 12,250 |
| Comparative Example | 7-1 | - | - | 10,750 |

| | | | | |
|---|---|---|---|---|
| *1 This means a concentration of the polymer dispersant relative to the mass of calcium carbonate. | | | | |

From the results of Examples 7-1 to 7-5 and Comparative Example 7-1, it was found that the low-temperature bending resistance of the halogen-based resin composition is improved by using the polymer dispersant of the present invention.

### Industrial Applicability

The in-oil dispersion of the present invention is coated or molded and sintered at a high temperature, and thus used as fine ceramics for electromagnetic and optical members. The in-oil dispersion of the present invention is excellent in coatability and moldability, and thus is useful as fine ceramics for IC packages, wiring boards, insulators, sensors, electrodes, magnetic materials, semiconductors, capacitors, optical fibers and the like.

The halogen-based resin composition of the present invention is excellent in processability and low-temperature bending resistance, and thus is useful as house interior goods such as adhesives, sealants, paints, plastisols, foams, synthetic leathers, pipes such as water pipes, building materials, wallpaper materials, flooring materials, floor covering materials, heat insulating materials, and roofing membrane materials; packaging materials such as food packaging films; agricultural materials such as agricultural films; automobile-related materials such as sealing materials and undercoat materials; substrate protection materials, fabric covering materials, electric wire covering materials, various leathers, various foamed products, general hoses, gaskets, packings, boots, toys, food packaging materials, medical articles such as tubes and blood bags, and the like.

## Claims

1. A polymer dispersant comprising a structural unit derived from a monomer represented by general formula (1) below and a structural unit derived from a monomer having a hydroxy group: 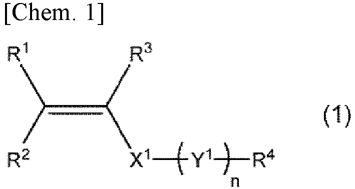 where
R¹, R², and R³ are each selected from a hydrogen element or a methyl group;
X¹ represents an oxygen element, an ester group, an amide group, or -CH₂O-;
Y¹ represents a repeating unit of an alkylene glycol having from 2 to 4 carbons;
R⁴ represents a hydrogen element or a hydrocarbon group having from 1 to 20 carbons; and n represents the number of repeating units of the alkylene glycol.

2. The polymer dispersant according to claim 1, wherein the polymer dispersant is any one of polymer dispersants A to C below:
the polymer dispersant A: a compound comprising: 20 mass% or more and 65 mass% or less of a structural unit derived from a monomer (a) represented by general formula (1a) below, the monomer (a) having a molecular weight of 400 or more and 2,000 or less; 5 mass% or more and 50 mass% or less of a structural unit derived from a monomer (b) having a hydroxy group, the monomer (b) having a molecular weight of less than 400; and 30 mass% or more and 75 mass% or less of a structural unit derived from a monomer (c) having a hydrophobic group, the monomer (c) having a molecular weight of less than 400: 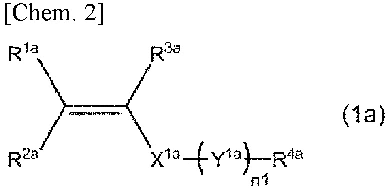
where
R^{1a}, R^{2a}, and R^{3a} are each selected from a hydrogen element or a methyl group;
X^{1a} represents an oxygen element, an ester group, an amide group, or -CH₂O-;
Y^{1a} represents a repeating unit of an alkylene glycol having from 2 to 4 carbons;
R^{4a} represents a hydrogen element or an alkyl group having from 1 to 4 carbons; and n1 represents the number of repeating units of the alkylene glycol,
the polymer dispersant B: a compound comprising: 45 mass% or more and 95 mass% or less of a structural unit derived from a monomer (d) represented by general formula (1b) below, the monomer (d) having a molecular weight of 300 or more and 2,000 or less; 5 mass% or more and 40 mass% or less of a structural unit derived from the monomer (b) having a hydroxy group, the monomer (b) having a molecular weight of less than 400; and 0 mass% or more and 20 mass% or less of a structural unit derived from the monomer (c) having a hydrophobic group, the monomer (c) having a molecular weight of less than 400: 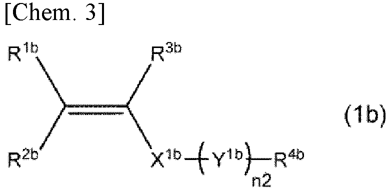
where
R¹⁶, R^{2b}, and R^{3b} are each selected from a hydrogen element or a methyl group;
X^{1b} represents an oxygen element, an ester group, an amide group, or -CH₂O-;
Y^{1b} represents a repeating unit of an alkylene glycol having from 2 to 4 carbons;
R^{4b} represents a hydrocarbon group having from 6 to 18 carbons; and n2 represents the number of repeating units of the alkylene glycol, and
the polymer dispersant C: a compound comprising: 10 mass% or more and 40 mass% or less of a structural unit derived from the monomer (d) represented by the general formula (1b), the monomer (d) having a molecular weight of 300 or more and 2,000 or less; 5 mass% or more and 20 mass% or less of a structural unit derived from the monomer (b) having a hydroxy group, the monomer (b) having a molecular weight of less than 400; and 60 mass% or more and 80 mass% or less of a structural unit derived from a macromonomer composed of a structural unit derived from the monomer (c) having a hydrophobic group, the monomer (c) having a molecular weight of less than 400.

3. The polymer dispersant according to claim 1 or 2, wherein the polymer dispersant has a weight average molecular weight of 5,000 or more and 120,000 or less.

4. The polymer dispersant according to any one of claims 1 to 3, wherein the number n of repeating units of the alkylene glycol is 2 or more and 40 or less.

5. An in-oil dispersion comprising:
the polymer dispersant described in any one of claims 1 to 4;
an inorganic filler; and
a compound having no group dissociating a hydrogen ion.

6. The in-oil dispersion according to claim 5, wherein the compound having no group dissociating a hydrogen ion is selected from the group consisting of toluene, xylene, acetone, methyl ethyl ketone, cyclohexanone, ethyl acetate, butyl acetate, and propylene glycol methyl ether acetate.

7. The in-oil dispersion according to claim 5 or 6, wherein a content of the inorganic filler is 10 mass% or more and 80 mass% or less.

8. A halogen-based resin composition comprising:
the polymer dispersant described in any one of claims 1 to 4;
an inorganic filler;
a compound having no group dissociating a hydrogen ion; and
a halogen-based resin.

9. The halogen-based resin composition according to claim 8, wherein an SP value as determined by a Fedors method of the compound having no group dissociating a hydrogen ion is 7.5 (cal/cm³)^{1/2} or more and 11.5 (cal/cm³)^{1/2} or less.

10. The halogen-based resin composition according to claim 8 or 9, wherein the compound having no group dissociating a hydrogen ion is selected from dialkyl phthalate or trialkyl trimellitate.

11. The halogen-based resin composition according to any one of claims 8 to 10, wherein a content of the inorganic filler is 1 part by mass or more and 150 parts by mass or less per 100 parts by mass of the halogen-based resin.

12. A method for producing an in-oil dispersion, the method comprising mixing the polymer dispersant described in any one of claims 1 to 4, an inorganic filler, and a compound having no group dissociating a hydrogen ion.

13. A method for producing a halogen-based resin composition, the method comprising mixing the polymer dispersant described in any one of claims 1 to 4, an inorganic filler, a compound having no group dissociating a hydrogen ion, and a halogen-based resin.

14. Use of a compound (I) as a dispersant, the compound (I) comprising a structural unit derived from a monomer having a hydroxy group and a structural unit derived from a monomer represented by general formula (1) below: 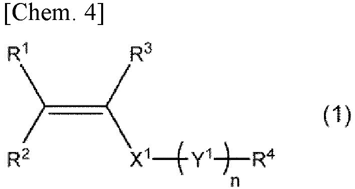 where
R¹, R², and R³ are each selected from a hydrogen element or a methyl group;
X¹ represents an oxygen element, an ester group, an amide group, or -CH₂O-;
Y¹ represents a repeating unit of an alkylene glycol having from 2 to 4 carbons;
R⁴ represents a hydrogen element or a hydrocarbon group having from 1 to 20 carbons; and n represents the number of repeating units of the alkylene glycol.

15. The use according to claim 14, wherein the compound (I) is any one of compounds A to C below:
the compound A: a compound comprising: 20 mass% or more and 65 mass% or less of a structural unit derived from a monomer (a) represented by general formula (1) below, the monomer (a) having a molecular weight of 400 or more and 2,000 or less; 5 mass% or more and 50 mass% or less of a structural unit derived from a monomer (b) having a hydroxy group, the monomer (b) having a molecular weight of less than 400; and 30 mass% or more and 75 mass% or less of a structural unit derived from a monomer (c) having a hydrophobic group, the monomer (c) having a molecular weight of less than 400: 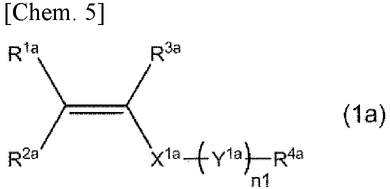
where
R^{1a}, R^{2a}, and R^{3a} are each selected from a hydrogen element or a methyl group;
X^{1a} represents an oxygen element, an ester group, an amide group, or -CH₂O-;
Y^{1a} represents a repeating unit of an alkylene glycol having from 2 to 4 carbons;
R^{4a} represents a hydrogen element or an alkyl group having from 1 to 4 carbons; and n1 represents the number of repeating units of the alkylene glycol,
the compound B: a compound comprising: 45 mass% or more and 95 mass% or less of a structural unit derived from a monomer (d) represented by general formula (1b) below, the monomer (d) having a molecular weight of 300 or more and 2,000 or less; 5 mass% or more and 40 mass% or less of a structural unit derived from the monomer (b) having a hydroxy group, the monomer (b) having a molecular weight of less than 400; and 0 mass% or more and 20 mass% or less of a structural unit derived from the monomer (c) having a hydrophobic group, the monomer (c) having a molecular weight of less than 400: 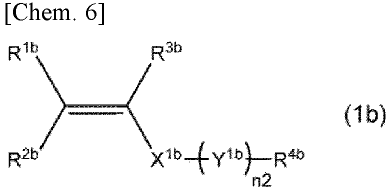
where
R¹⁶, R^{2b}, and R^{3b} are each selected from a hydrogen element or a methyl group;
X^{1b} represents an oxygen element, an ester group, an amide group, or -CH₂O-;
Y^{1b} represents a repeating unit of an alkylene glycol having from 2 to 4 carbons;
R^{4b} represents a hydrocarbon group having from 6 to 18 carbons; and n2 represents the number of repeating units of the alkylene glycol, and
the compound C: a compound comprising: 10 mass% or more and 40 mass% or less of a structural unit derived from the monomer (d) represented by the general formula (1b), the monomer (d) having a molecular weight of 300 or more and 2,000 or less; 5 mass% or more and 20 mass% or less of a structural unit derived from the monomer (b) having a hydroxy group, the monomer (b) having a molecular weight of less than 400; and 60 mass% or more and 80 mass% or less of a structural unit derived from a macromonomer composed of a structural unit derived from the monomer (c) having a hydrophobic group, the monomer (c) having a molecular weight of less than 400.

16. The use according to claim 15 for dispersing an inorganic filler in a compound having no group dissociating a hydrogen ion.

17. Use of the polymer dispersant described in any one of claims 1 to 4 for production of an in-oil dispersion.

18. Use of the polymer dispersant described in any one of claims 1 to 4 for production of a halogen-based resin composition.
